# EUROPEAN PATENT APPLICATION

(11) **EP 1 396 995 A2**
(43) Date of publication of application: **10.03.2004**
(21) Application number: 03255299.4
(22) Date of filing: 27.08.2003
(51) Int. Cl.: H04N 1/60, H04N 1/333

(54) **Image processing method, image processing apparatus, image recording apparatus, program and recording medium**

(30) Priority: 30.08.2002 JP 2002256097
(71) Applicant: KONICA CORPORATION, Tokyo (JP)
(72) Inventor: Takano, Hiroaki c/o Konica Corporation, Hino-shi, Tokyo 191-8511 (JP); Ito, Tsukasa c/o Konica Corporation, Hino-shi, Tokyo 191-8511 (JP); Ikeda, Chizuko c/o Konica Corporation, Hino-shi, Tokyo 191-8511 (JP)
(74) Representative: Nicholls, Michael John

(57) **Abstract**

There is described an image processing method of applying optimization processing, for forming an output-referred image on an outputting medium, to the digital image data outputted from an image-capturing apparatus. The method includes the steps of: converting a color space, provided for the image data, to a scene-referred color space by excluding color characteristics, being inherent to the image-capturing apparatus, from the color space; converting a gradation, provided for the image data, to a scene-referred gradation by excluding gradation characteristics, being inherent to the image-capturing apparatus, from the gradation, based on model gradation characteristic information representing the gradation characteristics inherent to the image-capturing apparatus; and optimizing processed image data, provided with the scene-referred color space and the scene-referred gradation so as to generate output-referred image data, which are optimized for reproducing an image on a specific outputting medium.

## Description

### BACKGROUND OF THE INVENTION

The present invention relates to an image processing method of applying optimization processing, for forming an output-referred image on an outputting medium, to the digital image data outputted from such an image-capturing apparatus as a digital camera, an image processing apparatus using this image processing method, an image recording apparatus for forming an output-referred image on an outputted medium using this image processing method, a program for allowing a computer to implement this image processing method, and a recording medium for allowing this program to be recorded and read by a computer.

In recent years, the digital image data obtained by photographing with such an image-capturing apparatus as a digital camera has come to be displayed and printed in a wide variety of methods. Such a digital image data is displayed on a display monitor including a CRT (Cathode Ray Tube), liquid crystal display and plasma display or a small-sized liquid crystal monitor display device of a cellular phone, and is printed out as a hard copy image using such an output device as a digital printer, inkjet printer and thermal printer.

When digital image data is displayed and output for viewing, it is provided with various types of image processing, such as gradation adjustment, brightness adjustment, color balance adjustment and enhancement of sharpness to ensure that a desired image quality is obtained on the display monitor used for viewing or on the hard copy.

In response to such varied display and printing methods, efforts have been made to develop an image processing methods. As part of these efforts, an attempt has been made to standardize the color space represented by digital RGB signals into the color space that does not depend on characteristics of an image-capturing apparatus. At present, large amounts of digital image data have adopted the sRGB (See Multimedia Systems and Equipment - Color Measurement and Management - Part 2-1: Color Management - Default RGB Color Space - sRGB" IEC61966-2-1) as a standardized color space. The color space of this sRGB has been established to meet the color reproduction area for a standard CRT display monitor.

A general digital camera is equipped with a CCD type image-capturing device (hereinafter also referred to simply as "CCD") having a photoelectric conversion function with color sensitivity provided by a combination of a CCD (charge coupled device), a charge transfer device and a mosaic color filter.

The digital image data outputted from the digital camera is obtained after the electric original signal gained by conversion via the CCD has been subjected to correction of the CCD photoelectric conversion function, for example, gradation correction, crosstalk correction of spectral sensitivity, dark current noise control, sharpening, white balance adjustment, chroma adjustment and such other image processing. It is obtained after having been subjected to processing of file conversion and compression into the data format standardized to permit reading and display by image editing software.

The above-mentioned data format widely known includes Baseline Tiff Rev. 6.0 RGB Full Color Image adopted as a non-compressed file of the Exif (Exchangeable Image File Format) file and compressed data file format conforming to the JPEG (Joint Photographic Experts Group) format.

The Exif file conforms to the above-mentioned sRGB, and the correction of the CCD photoelectric conversion function is established so as to ensure the most suitable image quality on the display monitor conforming to the sRGB.

Generally, if a digital camera has the function of writing into the file header of the digital image data the tag information for instructing display in the standard color space (hereinafter referred to as "monitor profile") of the display monitor conforming to the sRGB signal, and accompanying information indicating the device dependent data such as the number of pixels, pixel arrangement and number of bits per pixel as meta-data, then the tag information can be analyzed by the image edit software for displaying the digital image data on the digital display monitor, and the operator can be prompted to convert the monitor profile into the sRGB or conversion processing can be carried out automatically. This capability reduces the differences among different displays, and permits the image to be viewed under the optimum condition.

In addition to the device dependent data, the above-mentioned accompanying information includes;
information directly related to the camera type (device type) such as a camera name and code number,
information on photographing conditions such as exposure time, shutter speed, f-stop number (F number), ISO sensitivity, brightness value, subject distance range, light source, on/off status of a stroboscopic lamp, subject area, white balance, zoom scaling factor, subject configuration, photographing scene type, the amount of reflected light of the stroboscopic lamp source and chroma for photographing, and tags (codes) for indicating the information related to a subject. The image edit software and output device have a function of reading the above-mentioned accompanying information and making the quality of hard copy image more suitable.

Hardcopy image printed by various printing devices have different color reproduction areas depending on the configuration of the phosphor or color material to be used. For example, the color reproduction area of the CRT display monitor corresponding to the sRGB standard space has a wide bright green and blue area. It contains the area that cannot be reproduced by the hard copy formed by a silver halide photographic printer or inkjet printer. Conversely, the cyan area of the inkjet printing and the yellow area of the silver halide photographic printing contain the area that cannot be reproduced by the CRT display monitor corresponding to the sRGB standard color space. (For example, see "Fine imaging and digital photographing" edited by the Publishing Commission of the Japan Society of Electrophotography, Corona Publishing Co., P. 444).

Between a display based on additive color mixture and a printer based on subtractive color mixture, there are differences in the area to which greater importance is attached for gradation reproduction, and differences occur in the expression of shadow, depending on prints. So when an image printed in the RGB standard color space is to be printed, mapping is carried out again, according to the differences in the color gamut and brightness area between the two.

However, even if a digital camera conforms to the sRGB, there are differences of designing in the gradation characteristics or color reproduction space for each manufacturer or for each type of the digital camera of the same manufacturer. This leads to the inability of ensuring high quality and stable production of hard copy images to be printed by various types of printing devices.

The Official Gazettes of Japanese Patents Laid-Open Nos. 016807/2002 and 016821/2002 disclose a method for producing a high-quality processed image wherein a device dependent gradation characteristic curve of absorbing device dependent gradation characteristics differing for each type of a digital camera is created for each type of digital camera, independently of other gradation compensation curve, and the influence due to gradation characteristics inherent to the type of a digital camera is eliminated by conversion using this device dependent gradation characteristic curve.

This method is characterized in that AE (automatic exposure control) of the printer and AWB (automatic white balance adjustment) are carried out subsequent to pre-processing of absorbing the device dependent gradation characteristics of the digital camera using the device dependent gradation characteristics profile.

However, the present inventors have applied image processing according to the above-mentioned method to a great number of images, and have found out that a white balance adjustment error tends to occur in a close-up photograph of a person wearing red or green clothing, a photograph with a lawn or forest for a background or a close-up photograph of a flower.

### SUMMARY OF THE INVENTION

To overcome the abovementioned drawbacks in conventional image processing methods and apparatus, it is an object of the present invention to provide an image processing method for improving quality by eliminating from the output-referred image formed on the outputting medium the variations in quality that occur for each image-capturing apparatus, using the image-capturing and by improving the stability; an image processing apparatus using this image processing method; an image recording apparatus for forming an output-referred image on the outputting medium using this image processing apparatus; a program for allowing a computer to implement this image processing method; and a recording medium for allowing this program to be recorded and read by a computer.

Accordingly, to overcome the cited shortcomings, the abovementioned object of the present invention can be attained by image processing methods, image-processing apparatus, image-recording apparatus, computer programs and recording mediums described as follow.
(1) A method for processing image data outputted from an image-capturing apparatus, the method comprising the steps of: converting a color space, provided for the image data, to a scene-referred color space by excluding color characteristics, being inherent to the image-capturing apparatus, from the color space; converting a gradation, provided for the image data, to a scene-referred gradation by excluding gradation characteristics, being inherent to the image-capturing apparatus, from the gradation, based on model gradation characteristic information representing the gradation characteristics inherent to the image-capturing apparatus; and optimizing processed image data, provided with the scene-referred color space and the scene-referred gradation so as to generate output-referred image data, which are optimized for reproducing an image on a specific outputting medium.
(2) The method of item 1, wherein the color space is converted to the scene-referred color space by excluding the color characteristics from the color space, based on model color characteristic information representing the color characteristics inherent to the image-capturing apparatus.
(3) The method of item 2, wherein the model color characteristic information are acquired from the image data.
(4) The method of item 1, wherein the color space is converted to the scene-referred color space by excluding chroma differences, inherently existing between various types of image-capturing apparatus.
(5) The method of item 1, wherein the scene-referred color space is a standardized color space established in advance.
(6) The method of item 1, wherein the model gradation characteristic information are acquired from the image data.
(7) The method of item 1, further comprising the steps of:
   applying an exposure control processing and a gray-balance adjustment processing to the processed image data so as to correct a color deviation and to adjust a brightness of the image to be reproduced; and applying a gradation correction processing to the processed image data after the step of applying the exposure control processing and the gray-balance adjustment processing, so as to adjust gradation of the image to be reproduced.
(8) The method of item 7, wherein, in the step of applying a gradation correction processing, the gradation provided for the processed image data is nonlinearly compensated for.
(9) An apparatus for processing image data outputted from an image-capturing apparatus, the apparatus comprising: a storage to store a plurality of model gradation characteristic information sets each of which represents gradation characteristics inherent to each of a plurality of image-capturing apparatus; a retrieving section to retrieve a model gradation characteristic information set, corresponding to an image-capturing apparatus designated by an operator, from the plurality of model gradation characteristic information sets; a gradation converting section to convert a gradation, provided for the image data, to a scene-referred gradation by excluding gradation characteristics, being inherent to the image-capturing apparatus, from the gradation, based on the model gradation characteristic information set retrieved by the retrieving section; a color characteristic converting section to convert a color space, provided for the image data, to a scene-referred color space by excluding color characteristics, being inherent to the image-capturing apparatus, from the color space; and a controlling section to control a concerned section included in the apparatus so as to optimize processed image data, provided with the scene-referred gradation and the scene-referred color space, to generate outputted-referred image data, which are optimized for reproducing an image on a specific outputting medium.
(10) The apparatus of item 9, wherein the storage also stores a plurality of model color characteristic information sets each of which represents color characteristics inherent to each of the plurality of image-capturing apparatus and the retrieving section retrieves a model color characteristic information set, corresponding to the image-capturing apparatus designated by the operator, from the plurality of model color characteristic information sets stored in the storage; and wherein the color characteristic converting section converts the color space, provided for the image data, to the scene-referred color space by excluding the color characteristics from the color space, based on the model gradation characteristic information set retrieved by the retrieving section.
(11) The apparatus of item 10, wherein the retrieving section acquires the model color characteristic information set from the image data.
(12) The apparatus of item 9, wherein the color characteristic converting section converts the color space to the scene-referred color space by excluding chroma differences, inherently existing between various types of image-capturing apparatus.
(13) The apparatus of item 9, wherein the scene-referred color space is a standardized color space established in advance.
(14) The apparatus of item 9, wherein the retrieving section acquires the model gradation characteristic information set from the image data.
(15) The apparatus of item 9, wherein the controlling section applies an exposure control processing and a gray-balance adjustment processing to the processed image data so as to correct a color deviation and to adjust a brightness of the image to be reproduced, and then, applies a gradation correction processing to the processed image data, so as to adjust gradation of the image to be reproduced.
(16) The apparatus of item 15, wherein the controlling section nonlinearly compensated for the gradation provided for the processed image data when applying the gradation correction processing to the processed image data.
(17) An apparatus for reproducing an image on a specific outputting medium, based on image data outputted from an image-capturing apparatus, the apparatus comprising: a storage to store a plurality of model gradation characteristic information sets each of which represents gradation characteristics inherent to each of a plurality of image-capturing apparatus; a retrieving section to retrieve a model gradation characteristic information set, corresponding to an image-capturing apparatus designated by an operator, from the plurality of model gradation characteristic information sets; a gradation converting section to convert a gradation, provided for the image data, to a scene-referred gradation by excluding gradation characteristics, being inherent to the image-capturing apparatus, from the gradation, based on the model gradation characteristic information set retrieved by the retrieving section; a color characteristic converting section to convert a color space, provided for the image data, to a scene-referred color space by excluding color characteristics, being inherent to the image-capturing apparatus, from the color space; and a controlling section to control a concerned section included in the apparatus so as to optimize processed image data, provided with the scene-referred gradation and the scene-referred color space, to generate outputted-referred image data, which are optimized for reproducing the image on the specific outputting medium.
(18) The apparatus of item 17, wherein the storage also stores a plurality of model color characteristic information sets each of which represents color characteristics inherent to each of the plurality of image-capturing apparatus and the retrieving section retrieves a model color characteristic information set, corresponding to the image-capturing apparatus designated by the operator, from the plurality of model color characteristic information sets stored in the storage; and wherein the color characteristic converting section converts the color space, provided for the image data, to the scene-referred color space by excluding the color characteristics from the color space, based on the model gradation characteristic information set retrieved by the retrieving section.
(19) The apparatus of item 18, wherein the retrieving section acquires the model color characteristic information set from the image data.
(20) The apparatus of item 17, wherein the color characteristic converting section converts the color space to the scene-referred color space by excluding chroma differences, inherently existing between various types of image-capturing apparatus.
(21) The apparatus of item 17, wherein the scene-referred color space is a standardized color space established in advance.
(22) The apparatus of item 17, wherein the retrieving section acquires the model gradation characteristic information set from the image data.
(23) The apparatus of item 17, wherein the controlling section applies an exposure control processing and a gray-balance adjustment processing to the processed image data so as to correct a color deviation and to adjust a brightness of the image to be reproduced, and then, applies a gradation correction processing to the processed image data, so as to adjust gradation of the image to be reproduced.
(24) The apparatus of item 23, wherein the controlling section nonlinearly compensated for the gradation provided for the processed image data when applying the gradation correction processing to the processed image data.
(25) A computer program for executing image-processing steps, which are applied to image data outputted from an image-capturing apparatus so as to reproduce an image on a specific outputting medium, the computer program comprising the functional steps of: retrieving a model gradation characteristic information set, corresponding to an image-capturing apparatus designated by an operator, from a plurality of model gradation characteristic information sets stored in advance; converting a gradation, provided for the image data, to a scene-referred gradation by excluding gradation characteristics, being inherent to the image-capturing apparatus, from the gradation, based on the model gradation characteristic information set retrieved in the retrieving step; converting a color space, provided for the image data, to a scene-referred color space by excluding color characteristics, being inherent to the image-capturing apparatus, from the color space; and optimizing processed image data, provided with the scene-referred gradation and the scene-referred color space, to generate outputted-referred image data, which are optimized for reproducing the image on the specific outputting medium.
(26) The computer program of item 25, wherein, in the retrieving step, a model color characteristic information set, corresponding to the image-capturing apparatus designated by the operator, is also retrieved from a plurality of model color characteristic information sets stored in advance; and wherein, in the second converting step, the color space, provided for the image data, is converted to the scene-referred color space by excluding the color characteristics from the color space, based on the model gradation characteristic information set retrieved in the retrieving step.
(27) The computer program of item 26, wherein the model color characteristic information set is acquired from the image data.
(28) The computer program of item 25, wherein, in the second converting step, the color space is converted to the scene-referred color space by excluding chroma differences, inherently existing between various types of image-capturing apparatus.
(29) The computer program of item 25, wherein the scene-referred color space is a standardized color space established in advance.
(30) The computer program of item 25, wherein the model gradation characteristic information set is acquired from the image data.
(31) The computer program of item 25, wherein, in the optimizing step, an exposure control processing and a gray-balance adjustment processing are applied to the processed image data so as to correct a color deviation and to adjust a brightness of the image to be reproduced, and then, applies a gradation correction processing to the processed image data, so as to adjust gradation of the image to be reproduced.
(32) The computer program of item 31, wherein, in the optimizing step, the gradation provided for the processed image data is nonlinearly compensated for when applying the gradation correction processing to the processed image data.
(33) A storage medium that stores a computer program for executing image-processing steps, which are applied to image data outputted from an image-capturing apparatus so as to reproduce an image on a specific outputting medium, wherein the computer program comprises the functional steps of:
   retrieving a model gradation characteristic information set, corresponding to an image-capturing apparatus designated by an operator, from a plurality of model gradation characteristic information sets stored in advance; converting a gradation, provided for the image data, to a scene-referred gradation by excluding gradation characteristics, being inherent to the image-capturing apparatus, from the gradation, based on the model gradation characteristic information set retrieved in the retrieving step; converting a color space, provided for the image data, to a scene-referred color space by excluding color characteristics, being inherent to the image-capturing apparatus, from the color space; and optimizing processed image data, provided with the scene-referred gradation and the scene-referred color space, to generate outputted-referred image data, which are optimized for reproducing the image on the specific outputting medium.
(34) The storage medium of item 33, wherein, in the retrieving step, a model color characteristic information set, corresponding to the image-capturing apparatus designated by the operator, is also retrieved from a plurality of model color characteristic information sets stored in advance; and wherein, in the second converting step, the color space, provided for the image data, is converted to the scene-referred color space by excluding the color characteristics from the color space, based on the model gradation characteristic information set retrieved in the retrieving step.
(35) The storage medium of item 34, wherein the model color characteristic information set is acquired from the image data.
(36) The storage medium of item 33, wherein, in the second converting step, the color space is converted to the scene-referred color space by excluding chroma differences, inherently existing between various types of image-capturing apparatus.
(37) The storage medium of item 33, wherein the scene-referred color space is a standardized color space established in advance.
(38) The storage medium of item 33, wherein the model gradation characteristic information set is acquired from the image data.
(39) The storage medium of item 33, wherein, in the optimizing step, an exposure control processing and a gray-balance adjustment processing are applied to the processed image data so as to correct a color deviation and to adjust a brightness of the image to be reproduced, and then, applies a gradation correction processing to the processed image data, so as to adjust gradation of the image to be reproduced.
(40) The storage medium of item 39, wherein, in the optimizing step, the gradation provided for the processed image data is nonlinearly compensated for when applying the gradation correction processing to the processed image data.
   Further, to overcome the abovementioned problems, other image processing methods, image-processing apparatus, image-recording apparatus, computer programs and recording mediums, embodied in the present invention, will be described as follow:
(41) An image-processing method, characterized in that,
   in the image-processing method for generating visual image referred image data, serving as output-referred image data, by optimizing captured-image data outputted from an image-capturing apparatus for an visual use,
   after converting a color space, provided for the captured-image data, to a scene-referred color space from which color characteristics of the image-capturing apparatus are excluded, and converting a gradation, provided for the captured-image data, to a scene-referred gradation, from which gradation characteristics of the image-capturing apparatus are excluded, by employing model gradation characteristic information indicating gradation characteristics of the image-capturing apparatus, the visual image referred image data is generated by optimizing the converted captured-image data for an visual use.
(42) An image-processing method, characterized in that,
   in the image-processing method for generating visual image referred image data by optimizing captured-image data outputted from an image-capturing apparatus for an visual use,
   after converting a color space, provided for the captured-image data, to a scene-referred color space, from which color characteristics of the image-capturing apparatus are excluded, by employing model color characteristic information indicating color characteristics of the image-capturing apparatus, and converting a gradation, provided for the captured-image data, to a scene-referred gradation from which gradation characteristics of the image-capturing apparatus are excluded by employing model gradation characteristic information, the visual image referred image data is generated by optimizing the converted captured-image data for an visual use.
(43) The image-processing method, described in item 42, characterized in that the model color characteristic information are acquired from the captured-image data.
(44) The image-processing method, described in anyone of items 41 - 43, characterized in that the color space, provided for the captured-image data, is converted to the scene-referred color space by excluding chroma difference for every image-capturing apparatus.
(45) The image-processing method, described in anyone of items 41 - 43, characterized in that, when converting the color space, provided for the captured-image data, to the scene-referred color space, the color space is converted to a color space established and standardized in advance.
(46) The image-processing method, described in anyone of items 41 - 45, characterized in that the model gradation characteristic information are acquired from the captured-image data.
(47) The image-processing method, described in anyone of items 41 - 46, characterized in that, when generating the visual image referred image data from the captured-image data, provided with the scene-referred color space and the scene-referred gradation space, the visual image referred image data are generated by applying a gradation correction processing to the captured-image data, after applying an exposure control processing and a gray-balance adjustment processing to the captured-image data so as to correct a color deviation and to adjust a brightness of the image to be reproduced.
(48) The image-processing method, described in item 47, characterized in that, when performing the gradation correction processing, the gradation, provided for the captured-image data, is nonlinearly compensated for.
(49) An image-processing apparatus that optimizes the captured-image data outputted from an image-capturing apparatus for a visual purpose to generate visual image referred image data, characterized by comprising:
   a storage means for storing model gradation characteristic information, which represent gradation characteristics of plural kinds of image-capturing apparatus;
   an acquiring means for acquiring model gradation characteristic information corresponding to a designated image-capturing apparatus from the model gradation characteristic information of the plural kinds of image-capturing apparatus;
   a gradation characteristic compensating means for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating means for converting a color space, provided for the image data, to a scene-referred color space from which color characteristics of the image-capturing apparatus are excluded, and compensating for color characteristics of the captured image data; and
   a controlling means for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(50) An image-processing apparatus that optimizes the captured-image data outputted from an image-capturing apparatus for a visual purpose to generate visual image referred image data, characterized by comprising:
   a storage means for storing model gradation characteristic information, which represent gradation characteristics of plural kinds of image-capturing apparatus, and model color characteristic information, which represent color characteristics of plural kinds of image-capturing apparatus;
   an acquiring means for acquiring model gradation characteristic information and model color characteristic information corresponding to a designated image-capturing apparatus from the model gradation characteristic information and the model color characteristic information of the plural kinds of image-capturing apparatus;
   a gradation characteristic compensating means for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating means for converting a color space, provided for the image data, to a scene-referred color space from which color characteristics of the image-capturing apparatus are excluded by employing the model color characteristic information acquired by the acquiring means, and compensating for color characteristics of the captured image data; and
   a controlling means for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(51) The image-processing apparatus, described in item 50, characterized in that the model color characteristic information are acquired from the captured-image data.
(52) The image-processing apparatus, described in anyone of items 49 - 51, characterized in that the color space, provided for the captured-image data, is converted to the scene-referred color space by compensating for chroma difference for every image-capturing apparatus.
(53) The image-processing apparatus, described in anyone of items 49 - 51, characterized in that, when converting the color space, provided for the captured-image data, to the scene-referred color space, the color space is converted to a color space established and standardized in advance.
(54) The image-processing apparatus, described in anyone of items 49 - 53, characterized in that the model gradation characteristic information are acquired from the captured-image data.
(55) The image-processing apparatus, described in anyone of items 49 - 54, characterized in that, when generating the visual image referred image data from the captured-image data, provided with the scene-referred color space and the scene-referred gradation space, the controlling means generates the visual image referred image data by applying a gradation correction processing to the captured-image data, after applying an exposure control processing and a gray-balance adjustment processing to the captured-image data so as to correct a color deviation and to adjust a brightness of the image to be reproduced.
(56) The image-processing apparatus, described in item 55, characterized in that, when performing the gradation correction processing, the gradation, provided for the captured-image data, is nonlinearly compensated for.
(57) An image-recording apparatus that optimizes the captured-image data outputted from an image-capturing apparatus for a visual purpose to generate visual image referred image data, characterized by comprising:
   a storage means for storing model gradation characteristic information, which represent gradation characteristics of plural kinds of image-capturing apparatus;
   an acquiring means for acquiring model gradation characteristic information corresponding to a designated image-capturing apparatus from the model gradation characteristic information of the plural kinds of image-capturing apparatus;
   a gradation characteristic compensating means for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating means for converting a color space, provided for the image data, to a scene-referred color space from which color characteristics of the image-capturing apparatus are excluded, and compensating for color characteristics of the captured image data; and
   a controlling means for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(58) An image-recording apparatus that optimizes the captured-image data outputted from an image-capturing apparatus for a visual purpose to generate visual image referred image data, characterized by comprising:
   a storage means for storing model gradation characteristic information, which represent gradation characteristics of plural kinds of image-capturing apparatus, and model color characteristic information, which represent color characteristics of plural kinds of image-capturing apparatus;
   an acquiring means for acquiring model gradation characteristic information and model color characteristic information corresponding to a designated image-capturing apparatus from the model gradation characteristic information and the model color characteristic information of the plural kinds of image-capturing apparatus;
   a gradation characteristic compensating means for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating means for converting a color space, provided for the image data, to a scene-referred color space from which color characteristics of the image-capturing apparatus are excluded by employing the model color characteristic information acquired by the acquiring means, and compensating for color characteristics of the captured image data; and
   a controlling means for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(59) The image-recording apparatus, described in item 58, characterized in that the model color characteristic information are acquired from the captured-image data.
(60) The image-recording apparatus, described in anyone of items 57 - 59, characterized in that the color space, provided for the captured-image data, is converted to the scene-referred color space by compensating for chroma difference for every image-capturing apparatus.
(61) The image-recording apparatus, described in anyone of items 57 - 59, characterized in that, when converting the color space, provided for the captured-image data, to the scene-referred color space, the color space is converted to a color space established and standardized in advance.
(62) The image-recording apparatus, described in anyone of items 57 - 61, characterized in that the model gradation characteristic information are acquired from the captured-image data.
(63) The image-recording apparatus, described in anyone of items 57 - 62, characterized in that, when generating the visual image referred image data from the captured-image data, provided with the scene-referred color space and the scene-referred gradation space, the controlling means generates the visual image referred image data by applying a gradation correction processing to the captured-image data, after applying an exposure control processing and a gray-balance adjustment processing to the captured-image data so as to correct a color deviation and to adjust a brightness of the image to be reproduced.
(64) The image-recording apparatus, described in item 63, characterized in that, when performing the gradation correction processing, the gradation, provided for the captured-image data, is nonlinearly compensated for.
(65) A program for realizing the following functions in a computer that performs image processing for optimizing the captured-image data outputted from an image-capturing apparatus for a visual purpose to generate visual image referred image data:
   an acquiring function for acquiring model gradation characteristic information corresponding to a designated image-capturing apparatus from the model gradation characteristic information of the plural kinds of image-capturing apparatus stored in advance;
   a gradation characteristic compensating function for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating function for converting a color space, provided for the image data, to a scene-referred color space from which color characteristics of the image-capturing apparatus are excluded, and compensating for color characteristics of the captured image data; and
   a controlling function for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(66) A program for realizing the following functions in a computer that performs image processing for optimizing the captured-image data outputted from an image-capturing apparatus for a visual purpose to generate visual image referred image data:
   an acquiring function for acquiring model gradation characteristic information and model color characteristic information corresponding to a designated image-capturing apparatus from the model gradation characteristic information and the model color characteristic information of the plural kinds of image-capturing apparatus;
   a gradation characteristic compensating function for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating function for converting a color space, provided for the image data, to a scene-referred color space from which color characteristics of the image-capturing apparatus are excluded by employing the model color characteristic information acquired by the acquiring means, and compensating for color characteristics of the captured image data; and
   a controlling function for controlling a concerned section so as to compensate for gradation characteristics of the captured image data by employing the gradation characteristic compensating function and to compensate for the color characteristics of the captured image data, before generating the visual image referred image data.
(67) The program, described in item 66, characterized in that the model color characteristic information are acquired from the captured-image data by means of the acquiring function.
(68) The program, described in anyone of items 65 - 67, characterized in that the color space, provided for the captured-image data, is converted to the scene-referred color space by compensating for chroma difference for every image-capturing apparatus by means of the color characteristic compensating function.
(69) The program, described in anyone of items 65 - 67, characterized in that, when converting the color space, provided for the captured-image data, to the scene-referred color space, the color space is converted to a color space established and standardized in advance by means of the color characteristic compensating function.
(70) The program, described in anyone of items 65 - 69, characterized in that the model gradation characteristic information are acquired from the captured-image data by means of the acquiring function.
(71) The program, described in anyone of items 65 - 70, characterized in that, when generating the visual image referred image data from the captured-image data, provided with the scene-referred color space and the scene-referred gradation space, the controlling function generates the visual image referred image data by applying a gradation correction processing to the captured-image data, after applying an exposure control processing and a gray-balance adjustment processing to the captured-image data so as to correct a color deviation and to adjust a brightness of the image to be reproduced.
(72) The program, described in item 71, characterized in that, when performing the gradation correction processing, the gradation, provided for the captured-image data, is nonlinearly compensated for.
(73) A storage medium that stores computer-readable program codes for realizing the following functions in a computer that performs image processing for optimizing the captured-image data outputted from an image-capturing apparatus for a visual purpose to generate visual image referred image data:
   an acquiring function for acquiring model gradation characteristic information corresponding to a designated image-capturing apparatus from the model gradation characteristic information of the plural kinds of image-capturing apparatus stored in advance;
   a gradation characteristic compensating function for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating function for converting a color space, provided for the image data, to a scene-referred color space from which color characteristics of the image-capturing apparatus are excluded, and compensating for color characteristics of the captured image data; and
   a controlling function for controlling a concerned section so as to generate the visual image referred image data by optimizing the compensated image data for visual use, after the gradation characteristic compensating means compensates for the gradation characteristics of the captured image data and the color characteristic compensating means compensates for the color characteristics of the captured image data.
(74) A storage medium that stores computer-readable program codes for realizing the following functions in a computer that performs image processing for optimizing the captured-image data outputted from an image-capturing apparatus for a visual purpose to generate visual image referred image data:
   an acquiring function for acquiring model gradation characteristic information and model color characteristic information corresponding to a designated image-capturing apparatus from the model gradation characteristic information and the model color characteristic information of the plural kinds of image-capturing apparatus;
   a gradation characteristic compensating function for converting a gradation, provided for the image data, to a scene-referred gradation from which gradation characteristics of the image-capturing apparatus are excluded by employing the model gradation characteristic information acquired by the acquiring means, and compensating for gradation characteristics of the captured image data;
   a color characteristic compensating function for converting a color space, provided for the image data, to a scene-referred color space from which color characteristics of the image-capturing apparatus are excluded by employing the model color characteristic information acquired by the acquiring means, and compensating for color characteristics of the captured image data; and
   a controlling function for controlling a concerned section so as to compensate for gradation characteristics of the captured image data by employing the gradation characteristic compensating function and to compensate for the color characteristics of the captured image data, before generating the visual image referred image data.
(75) The storage medium, described in item 74, characterized in that the model color characteristic information are acquired from the captured-image data by means of the acquiring function.
(76) The storage medium, described in anyone of items 73 - 75, characterized in that the color space, provided for the captured-image data, is converted to the scene-referred color space by compensating for chroma difference for every image-capturing apparatus by means of the color characteristic compensating function.
(77) The storage medium, described in anyone of items 73 - 75, characterized in that, when converting the color space, provided for the captured-image data, to the scene-referred color space, the color space is converted to a color space established and standardized in advance by means of the color characteristic compensating function.
(78) The storage medium, described in anyone of items 73 - 77, characterized in that the model gradation characteristic information are acquired from the captured-image data by means of the acquiring function.
(79) The storage medium, described in anyone of items 73 - 78, characterized in that, when generating the visual image referred image data from the captured-image data, provided with the scene-referred color space and the scene-referred gradation space, the controlling function generates the visual image referred image data by applying a gradation correction processing to the captured-image data, after applying an exposure control processing and a gray-balance adjustment processing to the captured-image data so as to correct a color deviation and to adjust a brightness of the image to be reproduced.
(80) The storage medium, described in item 79, characterized in that, when performing the gradation correction processing, the gradation, provided for the captured-image data, is nonlinearly compensated for.

Accordingly, abovementioned features of the present invention allow a great variety of image-capturing apparatuses to provide image processing that ensures stable production of image data for high quality printing.

A preferred embodiment of the present invention comprises at least three steps; a first of correcting the conversion characteristics of the image-capturing apparatus, a second step of carrying out the processing of exposure control and gray balance adjustment and a third step of carrying out the processing of gradation compensation, and improves the accuracy and efficiency by sequentially performing the processing from the first to third steps.

The following provides a supplementary description of the terms used in the Claims of the present patent application:

The term "generate" refers to an act of producing a new electronic file by programs in the image-capturing apparatus, image processing apparatus and image recording apparatus according to the present invention. The term "create" is used synonymously with it in the following description.

"Image-capturing apparatus" denotes an apparatus equipped with an image-capturing device having a photoelectric conversion function, and includes a so-called digital camera and scanner. The image-capturing device is exemplified by the above-mentioned CCD type image-capturing device and a CMOS type image-capturing device. The output current from those image-capturing devices is digitized by an analog-to-digital converter. The contents in each color channel in this phase represent signal intensities based on the spectral sensitivity inherent to the image-capturing device.

"Captured image data" denotes the digital image data obtained by the step wherein, after the data digitized by the analog-to-digital converter has been subjected to correction of such a noise as fixed pattern noise and dark current noise, the output signal for the information faithfully representing a subject recorded by a image-capturing apparatus has been subjected to correction is subjected to image processing such as conversion of gradation, enhancement of sharpness and chroma enhancement to improve the effect in viewing the image, and the processing of mapping the signal intensity of each channel based on the spectral sensitivity inherent to the image-capturing device, onto the standard color space according to the RIMM RGB and ERIMM RGB (See the Journal of Imaging Science and Technology, Vol. 45 pp. 418 to 426 (2001) ) .

The "visual image referred image data", which serve as "output-referred image data", denotes digital image data generated according to the image processing method of the present invention. It is used for display by such a display device as CRT, liquid crystal display and plasma display, or to create hard copy image on such an outputting medium as silver halide photographic paper, inkjet paper and thermal printing paper. The visual image referred image data (also referred to as the output-referred image data) are provided with optimization processing in order to obtain the optimum image for viewing on the above-mentioned display device or outputting medium.

"Captured image data with scene-referred gradation and scene-referred color space" (hereinafter referred to as "scene-referred image data") is defined as the image data wherein the signal intensity of each color channel based on the spectral sensitivity inherent to the image-capturing device has already been mapped onto the standardized color space such as the RIMM RGB and ERIMM RGB, and image processing such as gradation conversion, sharpness enhancement and chroma enhancement to improve effects in image viewing has been omitted. It is preferred that the scene-referred image data be subjected to compensation for photoelectric conversion characteristics (opto-electronic conversion function defined in ISO1452, see "Fine imaging and digital photographing" edited by the Publishing Commission of the Japan Society of Electrophotography, Corona Publishing Co., P. 449) of the image-capturing apparatus.

The amount of information on the scene-referred image data (e.g. number of gradations) is preferred to be equal to greater than that of the information required by the output-referred data (e.g. number of gradations). For example, when the number of gradations for the output-referred image data is 8 bits per channel, the number of gradations for the scene-referred raw data is preferred to be 12 bits or more. It is more preferred to be 14 bits or more, and still more preferred to be 16 bits or more.

"Scene-referred gradation" refers to the gradation of the scene-referred image data wherein gradation conversion processing is omitted in the processing of an image for improvement of the image viewing effect. For processing of gradation conversion, there is a great difference in the setting for each image-capturing apparatus, and its high-precision estimation is difficult. Accordingly, model gradation characteristic information is used in the present invention when gradation conversion processing is omitted. As a result, the scene-referred gradation substantially exhibits the same gradation characteristic, irrespective of the type of the image-capturing apparatus, which acquires the captured-image data concerned.

"Scene-referred color space" refers to the color space for the scene-referred image data wherein mapping onto the standard color space according to the RIMM RGB and ERIMM RGB and chroma enhancement are omitted in the processing of an image to improve the image viewing effect. At present, many types of digital image data use the sRGB of the CRT display monitor to set the standard color space. Giving attention to this point, the present invention omits correction for each image-capturing apparatus, thereby ensuring image processing efficiency. Accordingly, the scene-referred color space provides almost the same reproduction characteristic if it conforms to the sRGB standard color space, independently of the type of an image-capturing apparatus having obtained the captured image data.

"Information showing the type of an image-capturing apparatus" (hereinafter referred to as "device type information") is information used to identity an image-capturing apparatus. It is represented by the device type name, number, symbol or code.

Device type information need not be recorded directly in the memory of an image processing apparatus or image recording apparatus. It is also possible to arrange such a configuration that the information is read from a remote server connected via the network, is inputted manually by an operator from the image processing apparatus or image recording apparatus, or is inputted automatically as information recorded in the captured image data.

When device type information is recorded in the captured image data, it is possible to use the input method where the device type name, number, symbol or code of the image-capturing apparatus is automatically inputted according to the mode recorded as tag information of the header part in the captured image data, or the method where the device type name, number, symbol or code of the image-capturing apparatus is automatically inputted according to the mode where the status information file is attached to indicate the relationship between the information on the device type of the image-capturing apparatus and corresponding captured image data.

When the information on the type of an image-capturing apparatus is represented by the number, symbol or code, a correspondence table with the device type name is essential. This correspondence table need not be recorded directly in the memory of the image processing apparatus or image recording apparatus. It is also possible to arrange such a configuration that the information is read from a remote server connected via the network.

"Model gradation characteristic information" is defined as the information for correcting the device-dependent gradation characteristics in conformity to the device type of the image-capturing apparatus. It includes the information directly indicating the gradation characteristics or information using the device type name, symbol or code to identify the image-capturing apparatus.

"Model gradation characteristic information" need not be recorded directly in the memory of an image processing apparatus or image recording apparatus. It is also possible to arrange such a configuration that the information is read from a remote server connected via the network, is inputted manually by an operator from the image processing apparatus or image recording apparatus, or is inputted automatically as information recorded in the captured image data.

When model gradation characteristic information is recorded in the captured image data, it is possible to use the input method where the model gradation characteristic information is automatically inputted according to the mode recorded as tag information of the header part in the captured image data, or the method where the model gradation characteristic information is automatically inputted according to the mode where the status information file is attached to indicate the relationship between the information on the model gradation characteristic information and its corresponding captured image data.

When model gradation characteristic information is the information using the device type name, symbol or code to identify the image-capturing apparatus and this information is inputted automatically, then the image processing apparatus or image recording apparatus are required to have a table showing the correspondence between the device type name and gradation characteristics. This correspondence table need not be stored directly in the memory of an image processing apparatus or image recording apparatus. It is also possible to arrange such a configuration that the information is read from a remote server connected via the network.

"Model color characteristic information" corrects the device-dependent color characteristics based on each image-capturing apparatus. It is the information directly indicating the color characteristics or using the device type name, symbol or code to identify the image-capturing apparatus.

The model color characteristic information need not be recorded directly in the memory of an image processing apparatus or image recording apparatus. It is also possible to arrange such a configuration that the information is read from a remote server connected via the network, is inputted manually by an operator from the image processing apparatus or image recording apparatus, or is inputted automatically as information recorded in the captured image data.

When the model color characteristic information is recorded in the captured image data, it is possible to use the input method where the model color characteristic information is automatically inputted according to the mode recorded as tag information of the header part in the captured image data, or the method where the model color characteristic information is automatically inputted according to the mode where the status information file is attached to indicate the relationship between the information on the model color characteristic information and its corresponding captured image data.

When the model color characteristic information indicates the device type name, symbol or code to identify the image-capturing apparatus, and this information is inputted automatically, then the image processing apparatus or image recording apparatus are required to have a table showing the correspondence between the device type name and color characteristics. This correspondence table need not be stored directly in the memory of an image processing apparatus or image recording apparatus. It is also possible to arrange such a configuration that the information is read from a remote server connected via the network.

The widely known data format in which information showing the type of an image-capturing apparatus, model gradation characteristic information and model color characteristic information are recorded as tag information of the header part in the captured image data includes Baseline Tiff Rev. 6.0 RGB Full Color Image adopted as a non-compressed file of the Exif file and compressed data file format conforming to the JPEG format, for example.

In the image processing apparatus of the present invention, prior to generation of the output-referred image data optimized for viewing, the color space of the captured image data is converted into the scene-referred color space and the model gradation characteristic information is used to convert the gradation of the captured image data into the scene-referred gradation, thereby applying pre-processing for the generation of scene-referred image data.

Based on the results of experiments, the present inventors have studied the problem, and have found out that it is possible to eliminate the above-mentioned white balance adjustment error in a close-up photograph of a person wearing red or green clothing, a photograph with a lawn or forest for a background or a close-up photograph of a flower, by converting the color space of the captured image data into scene-referred color space and using the model gradation characteristic information to convert it into the scene-referred gradation, prior to generation of the output-referred image data optimized for viewing.

The following reasons can be estimated to explain this:
In the general digital camera, processing is carried out to enhance the chroma on a selective basis for a particular color such as red or green. However, when only the device-dependent gradation profile created by gray patch is applied, correct scene-referred gradation cannot be attained in the color gamut subsequent to chroma enhancement, and a white balance adjustment error occurs, as disclosed, for example, in the Official Gazette of Japanese Patent Laid-Open No. 16807/2002.

In the prevent invention, approximately the same gradation and color reproduction characteristics are obtained, independently of the type of image-capturing apparatus used to get captured image data.

Further, prior to generation of the output-referred image data optimized for viewing, the gradation of the captured image data is converted into the scene-referred gradation using the model gradation characteristic information, and the color space of the captured image data is converted into the scene-referred color space using the model color characteristic information, thereby applying pre-processing for the generation of scene-referred image data.

"To obtain model color characteristic information from the captured image data outputted from the image-capturing apparatus" is to obtain model color characteristic information recorded as tag information written into the header part in the captured image data. When model color characteristic information is stored in the medium independently of the captured image data, model color characteristic information and/or captured image data must be assigned with information associating between the two or a separate status information file recording the relationship between the two.

At present, many types of digital image data use the sRGB of the CRT display monitor as a standard color space. Depending on each image-capturing apparatus, however, there is a big difference in the setting of the degree of chroma enhancement processing with respect to all colors or a specific color (e.g. skin color). It is difficult to estimate this setting accurately. Accordingly, model color characteristic information is used for conversion into a scene-referred color space.

Further, processing of conversion into the scene-referred color space is carried out by processing of correcting the chroma difference in response to the image-capturing apparatus. This enables high-precision correction of the changes in chroma resulting from the processing of conversion into the scene-referred gradation.

Still further, processing of conversion into the scene-referred gradation is carried out by processing of conversion into the standardized color space. This ensures improved processing accuracy and efficiency. Accordingly, the scene-referred color space provides almost the same reproduction characteristic if it conforms to the sRGB standard color space, independently of the type of an image-capturing apparatus having obtained the captured image data. Further, use of the model color characteristic information allows the differences in chroma enhancement of a specific color to be corrected, with the result that accuracy is further improved.

When the model gradation characteristic information has been created using a gray batch, it is preferred that gradation characteristics be corrected after the differences in color characteristics among different image-capturing apparatuses. Alternatively, correction of color and gradation characteristics can be carried out in one step by creating model gradation characteristic information for each hue angle, based on the result of actual photographing of a chart such as Munsell color card.

"To obtain model gradation characteristic information from the captured image data outputted from the image-capturing apparatus" is to obtain model gradation characteristic information recorded as tag information written into the header part in the captured image data. When model gradation characteristic information is stored in the medium independently of the captured image data, model gradation characteristic information and/or captured image data must be assigned with information associating between the two or a separate status information file recording the relationship between the two.

It is preferred that the present embodiment comprises at least three steps; a first of correcting the conversion characteristics inherent to the image-capturing apparatus, a second step of carrying out the processing of exposure control and gray balance adjustment and a third step of carrying out the processing of gradation compensation.

The first step is the process of generating scene-referred image data from the captured image data. The second step provides a process of further reducing the difference inherent to the image-capturing apparatus to permit common use of image data, and a process of generating output-referred image data preferable for viewing on the outputting medium, thereby serving as an intermediary between the first and third steps. Third step is the process for generating the output-referred image data that provides high quality preferable for viewing.

"Exposure control processing" corrects the brightness of the entire captured image data. For the captured image data, the way of showing the subject information inherent to the image-capturing apparatus is corrected in the first step to permit common use of the captured image data. However, due to the variation in the performances of the AE (automatic exposure control) function of the image-capturing apparatus and the variation in the manual setting by a photographer, there is a difference in brightness in the exposure control of the image-capturing apparatus.

The "Gray balance adjustment processing" corrects the color deviation of entire captured image data. For the captured image data, the way of showing the subject information inherent to the image-capturing apparatus is corrected in the first step to permit common use of the captured image data. However, due to the variation in the performances of the AWB (automatic white balance adjustment) function of the image-capturing apparatus, there is a difference in color deviation in the gray balance control (e.g. correction of the color temperature of a light source for viewing) of the image-capturing apparatus.

It is preferred that processing of the AE (automatic exposure control) and AWB (automatic white balance adjustment) carried out in step 2 be adjusted simultaneously based on the input/output conversion table (Lookup Table) set for each of B, G and R. To put it more specifically, the gray balance is adjusted by separate parallel movement of the LUT (Lookup Table) for each of B, G and R, and brightness is adjusted by simultaneous parallel movement.

"Gradation compensation processing" provides the process of adjusting the gradation to be preferred for viewing on such a display device as CRT, liquid crystal display and plasma display or on such an outputting medium as paper for hard copy image generation including silver halide photographic paper, inkjet paper and thermal printing paper. To put it more specifically, this processing includes the nonlinear compensation processing and γ compensation processing to be described below:

It is also preferred that processing of gradation compensation in the third step include the processing of nonlinear correction. It is further preferred that the third step comprises a step of correcting the γ value and a step of processing nonlinear correction, wherein the γ value is corrected first.

This processing of nonlinear correction provides the process of nonlinear correction of the highlighted and shaded portions of the image, thereby reducing the white skipping in the highlighted portion of an image or collapse in the shaded portion, for example, caused by narrow area for reproduction of the density on the outputting medium. It is preferred that the amount of correction be found out to ensure that, when the print density is raised by the second step (AE/AWB processing), the gradation on the highlighted portion is hardened and that on the shaded portion is softened; and if the print density is reduced, conversely, the gradation on the highlighted portion is softened and that on the shaded portion is hardened. It is preferred that the amount of correction found out in this manner be reflected on the correction curve.

The above-mentioned correction of γ is based on the reference gradation curve preset for each outputting medium. Hardening the gradation to get a preferable printer output as described above is called γ compensation processing. In the present embodiment, the reference gradation curve is shaped in the form of a letter S, for example, when the outputting medium is a silver halide photographic paper. The intermediate section is set so that γ is 1.6.

A "storage section", serving as a memory means, can be any one of the compact flash (registered trademark), memory stick (registered trademark), smart media (registered trademark), multi-media card (registered trademark), hard disk, floppy (registered trademark) disk, magnetic storage medium (MO (Magneto-Optical)) and CD-R (Compact Disk-Recordable). The unit for writing on the storage medium is integral with the image-capturing apparatus. However, it can be any one of a wired write unit connected via a cord, or a wireless unit installed independently or at a remote site connected through a communications line or via the Internet.

An "acquisition section", serving as an acquisition means, is a program or a processing circuit for acquiring model gradation characteristic information in response to the device type specified from among multiple types of model gradation characteristic information corresponding to multiple types of image-capturing apparatuses.

A "gradation characteristic compensation section", serving as a gradation characteristic compensation means, is a program or a processing circuit for converting the gradation of captured image data, using the model gradation characteristic information acquired by the acquiring section, into the scene-referred gradation independent of the type of the image-capturing apparatus, and for correcting the gradation characteristics of the captured image data.

A "color characteristic compensation section", serving as a color characteristic compensation means, is a program or a processing circuit for converting the captured image data color space into the scene-referred color space independent of the type of image-capturing apparatus, and for correcting the captured image data color characteristics.

An "acquiring section", serving as a acquiring means, is a program or a processing circuit for acquiring the model color characteristic information in response to the device type specified from among multiple types of model color characteristic information corresponding to multiple types of image-capturing apparatuses.

A "color characteristic compensation section", serving as a color characteristic compensation means, is a program or a processing circuit for converting the color space of captured image data, using the model color characteristic information acquired by the acquiring section, into the scene-referred color space independent of the type of the image-capturing apparatus, and for correcting the color characteristics of the captured image data.

### BRIEF DESCRIPTION OF THE DRAWINGS

Other objects and advantages of the present invention will become apparent upon reading the following detailed description and upon reference to the drawings in which:
Fig. 1 is a block diagram representing the functions of an image processing apparatus embodied in the present invention;
Fig. 2 is another block diagram representing the functions of an image processing apparatus embodied in the present invention;
Fig. 3 is a perspective view representing the external view of an image recording apparatus embodied in the present invention;
Fig. 4 is a block diagram representing the functions of an image recording apparatus embodied in the present invention;
Fig. 5 is a block diagram representing the functions of an image processing apparatus shown in Fig. 4;
Fig. 6 is another block diagram representing the functions of an image processing apparatus shown in Fig. 4;
Fig. 7 is a flowchart representing the image processing by an image processing apparatus embodied in the present invention;
Fig. 8 is another flowchart representing the image processing by an image processing apparatus embodied in the present invention;
Fig. 9 is still another flowchart representing the image processing by an image processing apparatus embodied in the present invention; and
Fig. 10 is a further flowchart representing the image processing by an image processing apparatus embodied in the present invention.

### DETAILED DESCRIPTION OF THE PREFERRED EMBODIMENT

The following describes the preferred embodiment of an image processing apparatus and image recording apparatus of the present invention:
A device-dependent gradation characteristic profile 103b to be explained below realizes the function of the memory section for memorizing the model gradation characteristic information described in the Claims of the present invention. A device-dependent gradation/color characteristic profile 103c realizes the functions of the memory section for memorizing the model gradation characteristic information and model color characteristic information. A device-dependent gradation characteristic compensation processing section 103a realizes the functions of the acquiring section for acquiring the model gradation characteristic information and gradation characteristic compensation section for compensating for gradation characteristics. A device-dependent color characteristic compensation processing section 104 realizes the functions of the acquiring section for acquiring the model color characteristic information and color characteristic compensation section for compensating for color characteristics. An output-referred image data generating section 107 realizes the function of a control section that compensates for gradation and color characteristics prior to generation of output-referred image data.

### <Image processing apparatus 117>

The configuration of the image processing apparatus 117 will be described first.

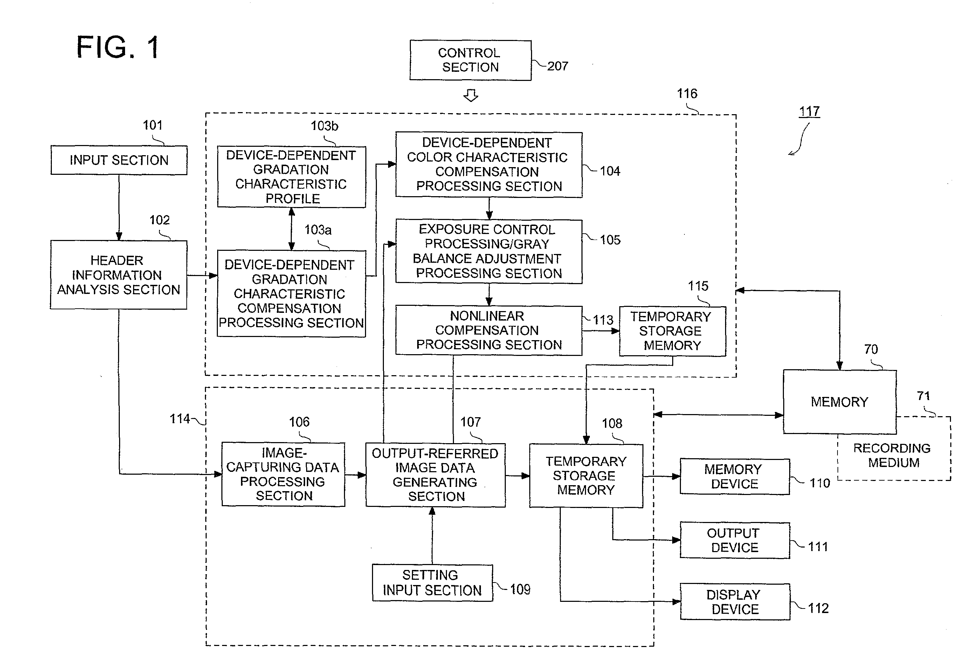

Fig. 1 is a block diagram representing the functions of an image processing apparatus 117 of the present embodiment.

The image processing apparatus 117 comprises an input section 101 for reading the captured image data from the recording medium and a header information analysis section 102 for analyzing the header information of captured image data. The "recording medium" used in this context can be any one of compact flash (registered trademark), memory stick (registered trademark), smart media (registered trademark), multi-media card (registered trademark), hard disk, floppy (registered trademark) disk, magnetic storage medium (MO (Magneto-Optical)) and CD-R (Compact Disk-Rewritable).

The image processing apparatus 117 is equipped with an image processing section 116 and an output-referred image data generating condition determining section 114. The image processing section 116 and output-referred image data generating condition determining section 114 are each connected with a header information analysis section 102, and the output-referred image data generating condition determining section 114 is connected with a memory device 110, an output device 111 and a display device 112.

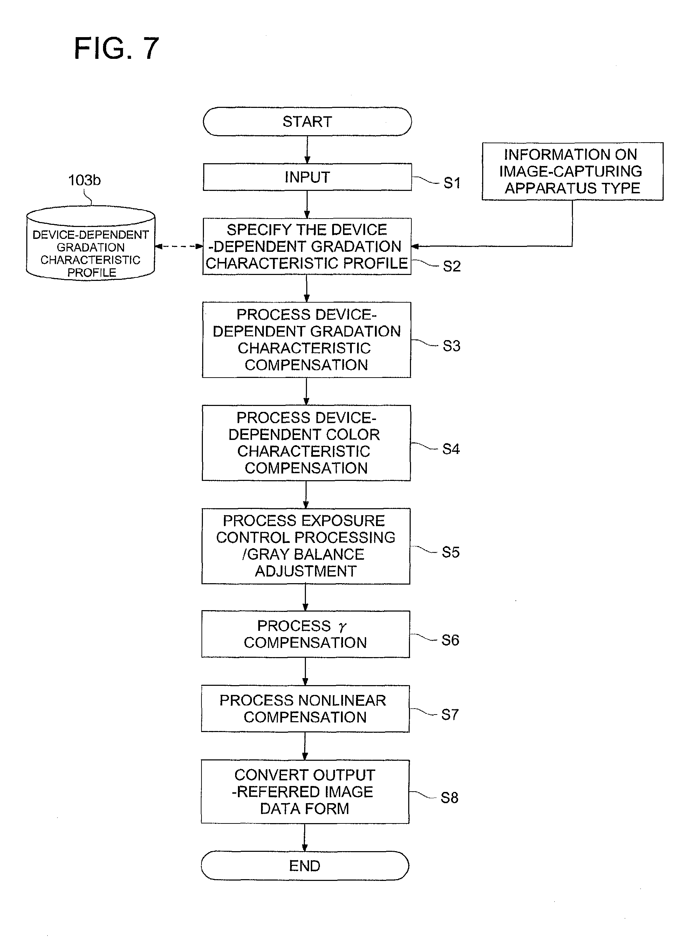

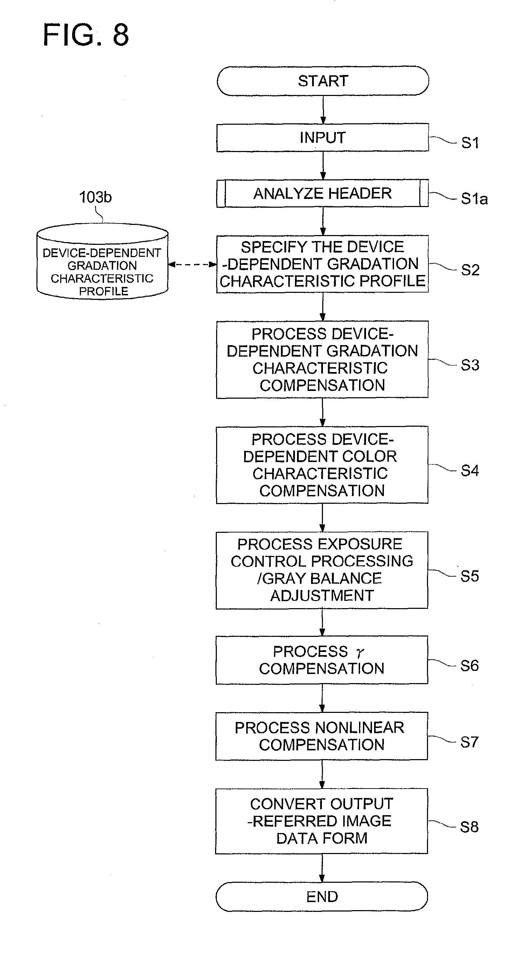

The image processing apparatus 117 has a control section 207 to execute the program recorded in the memory 70 or 71. The image processing apparatus 117 runs the program for performing the processing stored in the memory 70 or 71 as shown in the flowcharts of Figs. 7 and 8.

The input section 101 reads the captured image data stored in the memory medium, and the header information analysis section 102 divides it into captured image data, information indicating the type of the image-capturing apparatus attached to this captured image data and image-capturing data.

The image processing apparatus 116 comprises a device-dependent gradation characteristic compensation processing section 103a, a device-dependent color characteristic compensation processing section 104, an exposure control processing/gray balance adjustment processing section 105, a nonlinear compensation processing section 113 and a temporary storage memory 115.

Based on the information indicating the type of the image-capturing apparatus inputted from the header information analysis section 102, the device-dependent gradation characteristic compensation processing section 103a determines the device-dependent gradation characteristic compensation processing conditions by making reference to the device-dependent gradation characteristic profile 103b. Under the device-dependent gradation characteristic compensation processing conditions, the device-dependent gradation characteristic compensation processing section 103a carries out device-dependent gradation characteristic compensation processing, and generates scene-referred image data.

The information indicating the type of the image-capturing apparatus is not restricted to that inputted from the header information analysis section 102. It can be the information directly inputted by the operator.

The device-dependent color characteristic compensation processing section 104 generates the scene-referred image data provided with device-dependent color characteristic compensation processing, from the above-mentioned generated scene-referred image data. The exposure control processing/gray balance adjustment processing section 105 applies exposure control processing/gray balance adjustment processing to this generated scene-referred image data, and the nonlinear compensation processing section 113 applies nonlinear compensation processing to the scene-referred image data subsequent to exposure control processing/gray balance adjustment processing. The temporary storage memory 115 temporarily stores the scene-referred image data subsequent to nonlinear processing (output-referred image data).

The output-referred image data generating condition determining section 114 comprises an image-capturing data processing section 106, an output-referred image data generating section 107, a temporary storage memory 108 and a setting input section 109.

Based on the image-capturing data inputted from the header information analysis section 102, the image-capturing data processing section 106 specifies the output-referred image data generating conditions.

The operation information on the types of the memory device 110 for outputting the digital image data inputted from the setting input section 109, output device 111 and display device 112 is sent to the output-referred image data generating section 107.

The output-referred image data generating section 107 determines the final output-referred image data generating conditions, based on the information on the output-referred image data generating conditions specified by the image-capturing data processing section 106, and information on the types of the memory device 110, output device 111 and display device 112 inputted from the output-referred image data generating section 107.

The output-referred image data generated by the image processing apparatus 116 and stored in the temporary storage memory 115 is stored in the temporary storage memory 108 temporarily and is sent to any one of the memory device 110, output device 111 and display device 112, based on the operation information inputted from the setting input section 109.

### <Image processing apparatus 117a>

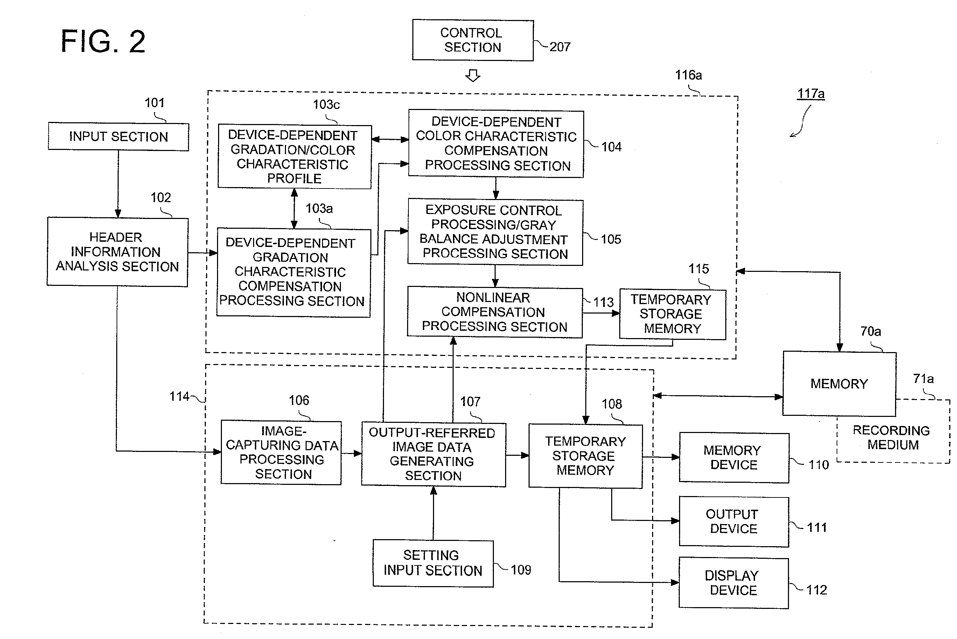

The image processing apparatus 117 has been described as a preferred embodiment of the present invention. However, without being limited to the preferred embodiment given above, the present invention is applicable to the image processing apparatus 117a shown in Fig. 2.

To simplify the drawing, the same components of the image processing apparatus 117a in Fig. 2 as those of the image processing apparatus 117 will be assigned with the same numerals of reference, and only the different components will be described in details. In particular, the image processing apparatus 117a contains the image processing apparatus 116a having the device-dependent gradation/color characteristic profile 103c in place of the device-dependent gradation characteristic profile 103b.

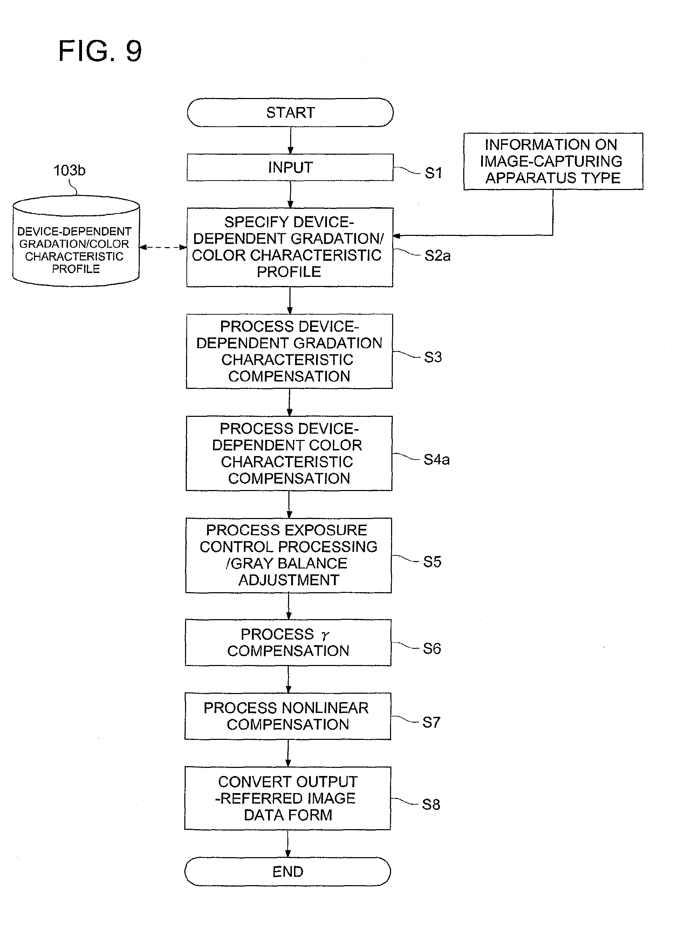

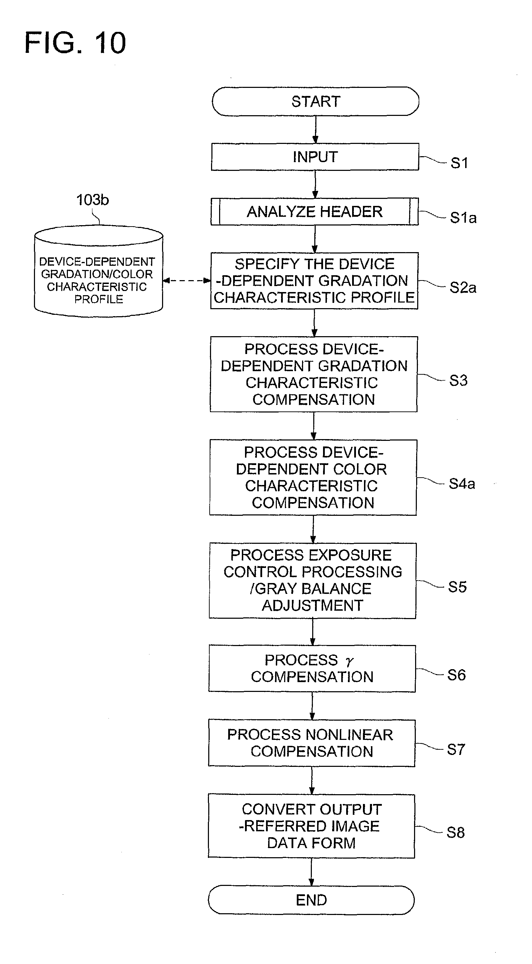

The image processing apparatus 117a has a control section 207, and executes the program recorded in the memory 70a or 71a. The image processing apparatus 117 runs the program for processing given in the flowchart of Figs. 9 and 10 stored in the memory 70a or 71a.

Based on the information indicating the type of the image-capturing apparatus, the device-dependent gradation characteristic compensation processing section 103a determines the device-dependent gradation characteristic compensation processing conditions by making reference to the device-dependent gradation/color characteristic profile 103c. The device-dependent gradation characteristic compensation processing section 103a generates the scene-referred image data, under the determined device-dependent gradation characteristic compensation processing conditions. Based on the generated scene-referred image data, the device-dependent color characteristic compensation processing section 104 determines the device-dependent color characteristic compensation processing conditions by making reference to the device-dependent gradation/color characteristic profile 103c. Under the determined device-dependent color characteristic compensation processing conditions, the device-dependent color characteristic compensation processing section 104 applies the device-dependent color characteristic compensation processing to the scene-referred image data and generates the scene-referred image data subsequent to device-dependent color characteristic compensation processing. The exposure control processing/gray balance adjustment processing section 105 applies exposure control processing/gray balance adjustment processing to the scene-referred image data generated by the device-dependent color characteristic compensation processing section 104, and the nonlinear compensation processing section 113 applies nonlinear compensation processing to the scene-referred image data subsequent to exposure control processing/gray balance adjustment processing. The temporary storage memory 115 temporarily stores the scene-referred image data (output-referred image data) subsequent to nonlinear compensation processing by the nonlinear compensation processing section 113.

### <Image recording apparatus 201>

The configuration of the image recording apparatus 201 will be described below:

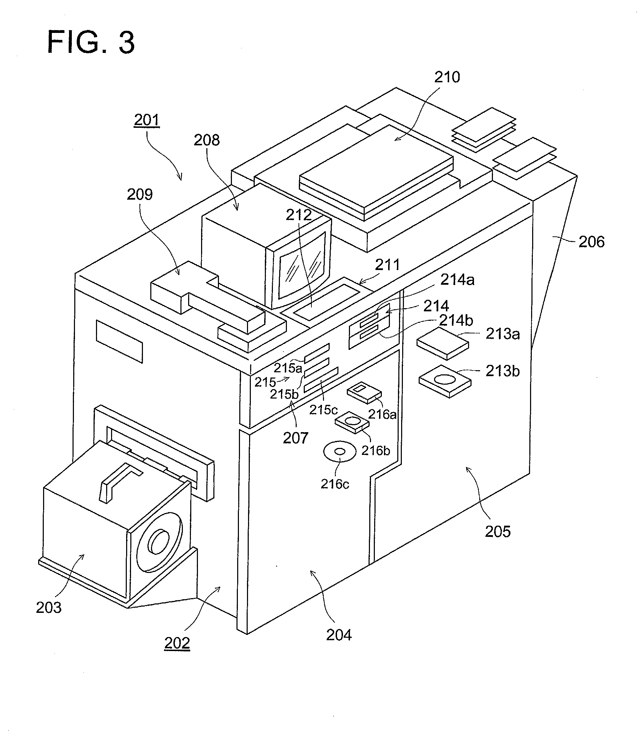

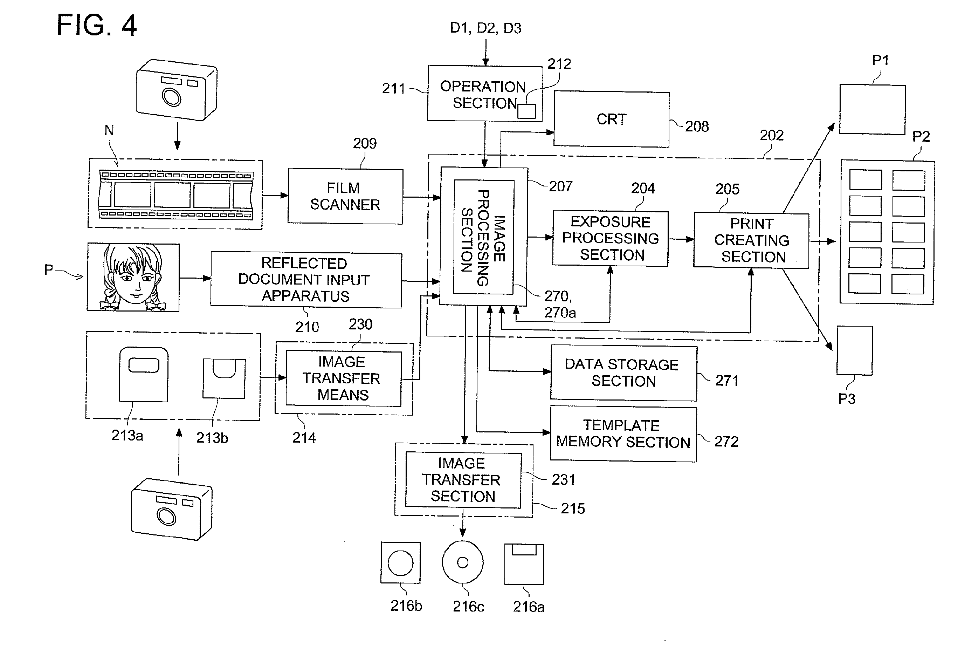

Fig. 3 is a perspective view representing the external view of the image recording apparatus 201. Fig. 4 is a block diagram representing the functions of the image recording apparatus 201.

The image recording apparatus 201 has a magazine loading section 203 on the left side of the main unit 202. An exposure processing section 204 for applying exposure on the silver halide photographic paper as an outputting medium and a print creating section 205 for creating a print by development are located inside the main unit 202. The created print is ejected to the tray 206 provided on the right of the main unit 202.

Inside the main unit 202, a control section 207 (see Fig. 4) is arranged over the exposure processing section 204, and a CRT 208 is installed on the top of the main unit 202. The CRT 208 has a function of displaying on the screen the image from which a print is to be created.

A film scanner 209 as a transparent document reader is arranged on the left of the CRT 208, and a reflected document input apparatus 210 is located on the right. The original read from the film scanner 209 and reflected document input apparatus 210 includes a photographic material.

This photographic material includes a color negative film, color reversal film, monochrome film and monochrome reversal film. Frame image information captured by an analog camera is recorded.

The film scanner of film scanner section 209 captures the digital image data from the document and converts it into frame image data. When the photographic material is color paper as silver halide photographic paper, it is converted into frame image data by the flat bed scanner of the reflected document input apparatus 210.

An image reader 214 is installed on the control section 207 of the main unit 202. A PC card adaptor 214a and a floppy (R) disk adaptor 214b on the image reader 214 so that a PC card 213a and a floppy (R) disk 213b can be loaded.

The PC card 213a contains the memory storing multiple pieces of frame image data captured by the digital camera. The floppy (R) disk 213b stores multiple pieces of frame image data captured by the same digital camera. An operation section 211 is arranged just short of the CRT 208, and this operation unit 211 is provided with an information input section 212. The information input section 212 consists of a touch panel and others.

Other recording means include a multi-media card (registered trademark), memory stick (registered trademark, MD and CD-R.

The operation section 211, CRT 208, film scanner 209, reflected document input apparatus 210 and image reader 214 are integrally constructed with the main unit 202. It is also possible to arrange such a configuration that any one of them is installed separately.

An image write section 215 is located on the control section 207 of the main unit 202. The image write section 215 is provided with a floppy disk adaptor 215a, MO adaptor 215b and optical disk adaptor 215c. Image information can be written on a floppy disk 216a, MO 216b and optical disk 216c mounted on respective adaptors.

Based on the instruction from the information input section 212, the control section 207 reads document information from the film scanner 209 and reflected document input apparatus 210, and displays the image data on the CRT 208.

The control section 207 has an image recording apparatus 270, which processes the image data, generates image data to be outputted, and sends it to the exposure processing section 204. The exposure processing section 204 exposes the image to the photographic material, and develops and dries this photographic material to create prints P1, P2 and P3. Print P1 is available in a service size, high-vision size or panorama size. Print P2 is an A4-sized print, print P3 is a business card-sized print (2 in. × 3 in.).

The image reader 214 reads the frame image data recorded on the PC card 213a and floppy (R) disk 213b. The image reader 214 is equipped with a PC card adaptor 214a and floppy (R) disk adaptor 214b as image transfer means 230. The image reader 214 reads the frame image data from the PC card 213a mounted on the PC card adaptor 214a or the floppy (R) disk 213b mounted on the floppy (R) disk adaptor 214b, and transfers it to the control section 207. A PC card reader or a PC card slot, for example, is used as the PC card adaptor 214a.

The image write section 215 is provided with a floppy disk adaptor 215a, MO adaptor 215b, and optical disk adaptor 215c as an image transfer section 231 so that the floppy disk 216a, MO 216b and optical disk 216c can be inserted, hence the image data can be written and read.

The data storage section 271 memorizes image information and its corresponding order information (information on the number of prints to be created from the image of a particular frame) and stores them sequentially. The film scanner 209 inputs the frame image data of the developed negative film N, and the reflected document input apparatus 210 inputs the frame image data of the print P that has been developed by printing the frame image on color paper.

The template memory section 272 memorizes at least one of the template data items for setting the area composite with the background image and illustrated image as sample image data, in response to sample identification information items D1, D2 and D3. The frame image is merged with the specified template, and the sample image in conformity to the specified sample identification information items D1, D2 and D3 is merged with the order-based image data and/or character data, thereby creating a print based on the specified sample. Merging by this template is performed by the widely known chromakey technique.

The image recording apparatus 201 is arranged in such a way that sample identification information items D1, D2 and D3 for specifying a print sample are inputted from the operation section 211. Since sample identification information items D1, D2 and D3 are recorded in a print sample or order sheet in advance, these sample identification information items D1, D2 and D3 can be read by such reading means as an OCR. Alternatively, sample identification information items D1, D2 and D3 can be directly inputted by an operator using the keyboard.

As described above, the image recording apparatus 201 records sample image data in advance in response to sample identification information. Based on the inputted sample identification information items D1, D2 and D3, sample image data is selected, and the selected sample image data and image data and/or character data based on the order are merged to create a print according to the specified sample. This procedure allows a user to directly check full-sized samples of various dimensions before placing an order. This permits wide-ranging user requirements to be satisfied.

The image processing apparatus 270 contains communications means (not illustrated) and receives the image data indicating the captured-image data and printing and other work instruction from another computer in the facilities or a remote computer via the Internet, and is capable of performing image processing and printing in the remote control mode.

Using the communications means (not illustrated) of the above-mentioned image processing apparatus 270, the image processing apparatus 270 is capable of sending the image data after image processing of the present invention has been applied, and accompanying order information, to another computer in the facilities or a remote computer via the Internet.

As described above, the image recording apparatus 201 comprises:
an input section for capturing the image recorded on the digital image data of various types and image information obtained by dividing the image document and measuring a property of light;
an image processing section for processing the information on the input image captured from this input section in such a way that this image will provide a favorable impression when viewed on the outputting medium, from the information on "size of the output image" and "size of the major subject in the output image";
an image outputting section for displaying or printing out of the processed image, or writing it on the image recording medium; and
a communications section for sending the image data and accompanying order information to another computer in the facilities through a communications line or a remote computer connected through the Internet.

### <Image processing apparatus 270>

The following describes the configuration of the image recording apparatus 270.

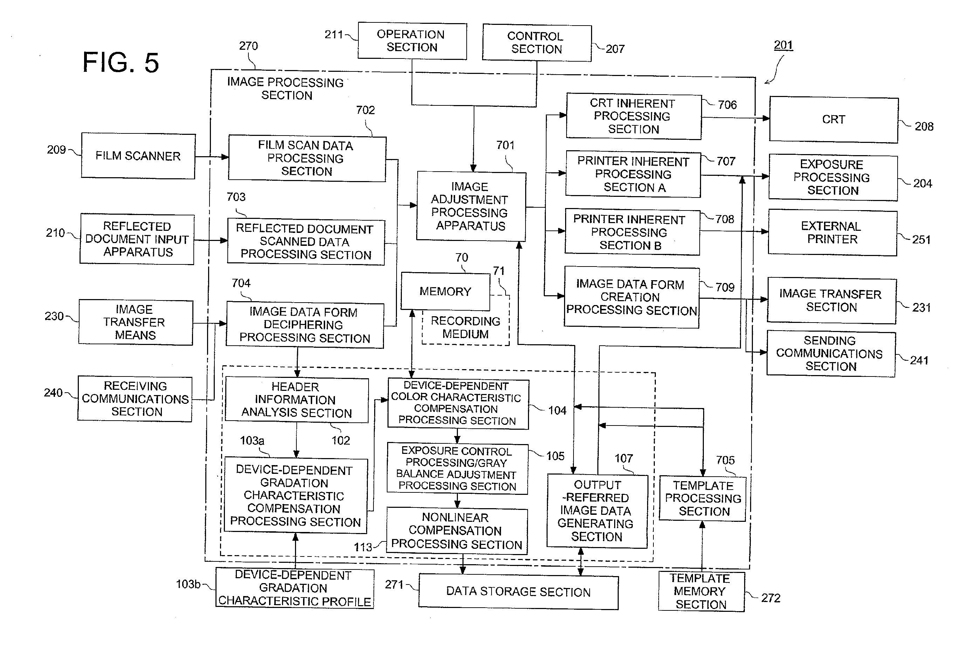

Fig. 5 is a block diagram representing the functions of the image processing apparatus 270.

To simplify the description, the same components of the image processing apparatus 270 in Fig. 5 as those of the image processing apparatuses 117 and 117a in Figs. 1 and 2 will be assigned with the same numerals of reference.

The image processing apparatus 270 comprises an image adjustment processing apparatus 701, film scan data processing section 702, reflected document scanned data processing section 703, image data form deciphering processing section 704, template processing section 705, CRT inherent processing section 706, printer inherent processing section A 707, printer inherent processing section B 708 and image data form creation processing section 709, as well as a header information analysis section 102 of the image processing apparatuses 117 and 117a in Figs. 1 and 2, as well as an apparatus characteristic compensation information processing section 103a, device-dependent color characteristic compensation processing section 104, exposure control processing/gray balance adjustment processing section 105, image-capturing data processing section 106 and output-referred image data generating section 107.

The image processing apparatus 270 further comprises a memory 70 or recording medium 71. The memory 70 or recording medium 71 stores programs to be run by the control section 207. The memory 70 or recording medium 71 stores the programs for carrying out the processing shown in Figs. 7 and 8, in particular.

The film scan data processing section 702 applies calibration inherent to the film scanner, negative/positive reversal of a negative document, removal of dust and scratch, gray balance adjustment, contrast adjustment, removal of granular noise and enhancement of sharpness to the image data inputted from the film scanner 209. The result is sent to the image adjustment processing section 701. In this case, the film size, negative/positive type, information on the major subject recorded optically or magnetically on the film and information on photographing conditions (e.g. information described on the APS) are also sent to the image adjustment processing apparatus 701.

The film scan data processing section 703 applies calibration inherent to the reflected document input apparatus, negative/positive reversal of a negative document, removal of dust and scratch, gray balance adjustment, contrast adjustment, removal of noise and enhancement of sharpness to the image data inputted from the reflected document input apparatus 210. The result is sent to the image adjustment processing section 701.

In the image data form deciphering processing section 704, image data inputted from the image data inputted from the image transfer means 230 and receiving communications section 240 is subjected to decompression of the compressed symbols or conversion of the color data representation method, as required, according to the form of the image data. It is converted into the data format suitable for numerical computation inside the image processing section 270 and is sent to the image adjustment processing apparatus 701.

Designation of the size of an output image is inputted from the operation section 211. If there is designation of the size of the output image to be sent to the receiving communications section 240 or designation of the size of the output image embedded in the image data head information acquired by the image transfer means 230 or tag information the image data form deciphering processing section 704 detects this information and transfers it to the image adjustment processing section 701.

When the captured image data has been inputted from the image transfer means 230 or receiving communications section 240, and the image data form deciphering processing section 704 has detected this input, the header information analysis section 102 divides captured image data into the output-referred image data, information representing the type of the image-capturing apparatus attached to this output-referred image data, and image-capturing data.

Based on the information representing the type of the image-capturing apparatus inputted from the header information analysis section 102, the device-dependent gradation characteristic compensation processing section 103a determines the device-dependent gradation characteristic compensation processing conditions by making reference to the device-dependent gradation characteristic profile 103b. Under the determined the device-dependent gradation characteristic compensation processing conditions, the device-dependent gradation characteristic compensation processing section 103a generates the scene-referred image data by carrying out device-dependent gradation characteristic compensation processing. Based on the generated scene-referred image data, the device-dependent color characteristic compensation processing section 104 generates the scene-referred image data having been subjected to device-dependent color characteristic compensation processing. The exposure control processing/gray balance adjustment processing section 105 applies exposure control processing/gray balance adjustment processing to the generated scene-referred image data, and the nonlinear compensation processing section 113 applies nonlinear compensating processing to the scene-referred image data having been subjected to exposure control processing/gray balance adjustment processing. Subsequent to such processing, output-referred image data is generated. The generated output-referred image data is stored in the data storage section 271 temporarily.

Based on the instruction inputted from the operation section 211 and control section 207, the image adjustment processing apparatus 701 transfers to the output-referred image data generating section 107 the image processing conditions for creating the captured-image referred data suited to the output device and output medium. In this case, the output-referred image data generating section 107 determines the output-referred image data generating conditions, based on the image-capturing data sent from the header information analysis section 102 and image processing condition sent from the image adjustment processing apparatus 701.

When template processing is required, the image adjustment processing apparatus 701 calls out a predetermined template from the template memory section 272 and transfers it to the template processing section 705 together with the image data. Then the image data (image data merged with the template) having been subjected to template processing is received again from the template processing section 705.

Based on the instruction inputted from the operation section 211 and control section 207, the image adjustment processing apparatus 701 applies image processing to the image data received from the film scanner 209, reflected document input apparatus 210, image transfer means 230, receiving communications section 240 and template processing section 705 so as to give a preferable impression when viewed. The digital camera to be outputted after having been subjected to image processing is sent to the CRT inherent processing section 706, printer inherent processing section A 707, image data form creation processing section 709 and data storage section 271 by the image adjustment processing apparatus 701.

The CRT inherent processing section 706 applies processing of changing the number of pixels or color matching to the image data received from the image adjustment processing apparatus 701, as required. Then the image data for display merged with the information requiring control information, etc. is sent to the CRT 208.

The printer inherent processing section A 707 provides processing of printer inherent calibration, color matching and change in the number of pixels, as required, and sends image data to the exposure processing section 204. When an external printer 251 such as a large-format inkjet printer is to be connected to the image recording apparatus 201, a printer inherent processing section B 708 is provided for each printer to be connected, so that adequate printer inherent calibration, color matching, change in the number of pixels and other processing can be carried out.

The image data form creation processing section 709 converts the image data received from the image adjustment processing apparatus 701, into various types of general-purpose image format represented by JPEG, TIFF and Exif as required. Then the image data is sent to the image transfer section 231 and sending communications section 241.

The output-referred image data generated under the conditions determined by the output-referred image data generating section 107 assumes processing by the CRT inherent processing section 706, printer inherent processing section A 707, printer inherent processing section B 708 and image data form creation processing section 709. In particular, the image data form creation processing section 709 attaches to this image data the status file identifying the optimized image data for CRT, exposure output section, external printer, transmission, etc., based on output-referred image data form, and sends the resultant image data to the image transfer section.

The above-mentioned division into the film scan data processing section 702, reflected document scanned data processing section 703, image data form deciphering processing section 704, image adjustment processing apparatus 701, CRT inherent processing section 706, printer inherent processing section A 707, printer inherent processing section B 708 and image data form creation processing section 709 is assumed to assist understanding of the functions of the image processing section 270. They need not necessarily be realized as physically independent devices. For example, they can be realized in the form of a division of the type of software processing in a single CPU.

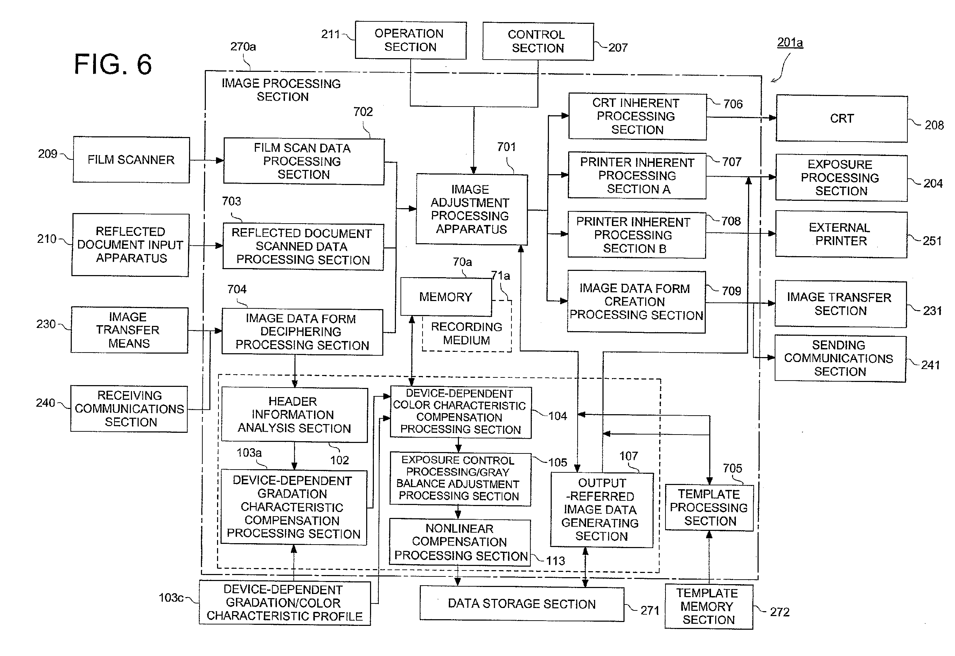

The division of the header information analysis section 102, device-dependent gradation characteristic compensation processing section 103a, device-dependent gradation characteristic profile 103b (or device-dependent gradation/color characteristic profile 103c shown in Fig. 6), device-dependent color characteristic compensation processing section 104, exposure control processing/gray balance adjustment processing section 105, image-capturing data processing section 106 and output-referred image data generating section 107 is assumed to assist understanding of the functions of the image processing section 270 of the present invention. They need not necessarily be realized as physically independent devices. For example, they can be realized in the form of a division of the type of software processing in a single CPU.

### <Image processing apparatus 270a>

The image processing apparatus 270 has been described as a preferred embodiment of the present invention. However, without being limited to the preferred embodiment given above, the present invention is applicable to the image processing apparatus 270a shown in Fig. 6.

The same components shown in Fig. 6 as those of Fig. 5 will be assigned with the same numerals of reference, and only the components different from those of the image processing apparatus 270 will be described in details.

The image processing apparatus 270 has a memory 70a or 71a, which stores the programs to be executed by the control section 207. The memory 70a or 71a in particular stores the program for processing given in the flowchart of Figs. 9 and 10.

Based on the information indicating the type of the image-capturing apparatus, the device-dependent gradation characteristic compensation processing section 103a determines the device-dependent gradation characteristic compensation processing conditions, based on the information on the type of the image-capturing apparatus inputted from the header information analysis section 102 by making reference to the device-dependent gradation/color characteristic profile 103c. In conformity to the determined device-dependent gradation characteristic compensation processing conditions, the device-dependent gradation characteristic compensation processing section 103a carries out device-dependent gradation characteristic compensation processing to generate the scene-referred image data. Based on the generated scene-referred image data, the device-dependent color characteristic compensation processing section 104 determines the device-dependent color characteristic compensation processing conditions, by making reference to the device-dependent gradation/color characteristic profile 103c. Under the device-dependent color characteristic compensation processing conditions, the device-dependent color characteristic compensation processing section 104 applies device-dependent color characteristic compensation processing to the scene-referred image data, and generates the scene-referred image data having been subjected to device-dependent color characteristic compensation processing. The exposure control processing/gray balance adjustment processing section 105 applies exposure control processing/gray balance adjustment processing to the generated scene-referred image data, and the nonlinear compensation processing section 113 applies nonlinear compensation to the scene-referred image data having been subjected to exposure control processing/gray balance adjustment processing or other processing to generate scene-referred image data. This generated scene-referred image data is stored in the data storage section 271.

### <Operation of image processing apparatus 117>

The following describes the operation of image processing apparatus 117:
Fig. 7 is a flowchart representing the image processing by an image processing apparatus 117. The operation of the image processing apparatus 270 is the same as that described below, so its description will be omitted to avoid duplication.

Contents of processing illustrated in the flowchart of Fig. 7 are stored in the memory 70 or recording medium 71 as a program to be run by the control section 207.

When captured image data has been inputted from the input section 101 (Step S1), the control section 207 uses the device-dependent gradation characteristic compensation processing section 103a to selects and specifies the relevant device-dependent gradation characteristic profile from among the device-dependent gradation characteristic profiles 103b, based on the information on the type of the image-capturing apparatus (Step S2).

After Step S2, the control section 207 uses the device-dependent gradation characteristic compensation processing section 103a to apply device-dependent gradation characteristic compensation processing to the captured image data, based on the device-dependent gradation characteristic profile specified in Step S2 (Step S3).

After Step S3, the control section 207 uses the device-dependent color characteristic compensation processing section 104 to applies device-dependent color characteristic compensation processing to the captured image data (Step S4), and generates scene-referred image data.

After Step S4, the control section 207 uses the exposure control processing/gray balance adjustment processing section 105 to apply exposure control processing/gray balance adjustment processing to the scene-referred image data (Step S5). After that, γ compensation processing (Step S6) and nonlinear compensation are applied to the scene-referred image data by the nonlinear compensation processing section 113 sequentially (Step S7), thereby optimizing the image quality in response to each output medium.

The control section 207 converts the scene-referred image data having been subjected to nonlinear compensation, to the output-referred image data (Step S8).

The information representing the type of the image-capturing apparatus is directly inputted by the operator. Without being restricted thereto, it can be inputted from the header information analysis section 102 in Step S1a shown in the flowchart of Fig. 8.

In the flowchart of Fig. 8, a new Step S1a is installed after Step S1 of Fig. 7. Accordingly, other steps in Fig. 8 will be assigned with the same numbers as those of Fig. 7, and will not be described to avoid duplication.

Contents of the processing illustrated in the flowchart of Fig. 8 are stored in the memory 70 or recording medium 71 as a program to be run by the control section 207.

The operation of the flowchart in Fig. 8 can be performed by the image processing apparatus 270.

### <Operation of image processing apparatus 117a>

The following describes the operation of image processing apparatus 117a.

Fig. 9 is a flowchart representing the image processing by the image processing apparatus 117a. In the flowchart of Fig. 9, the Step S2 out of the above-mentioned steps in Fig. 7 is replaced by step S2a, and step S4 is replaced by step S4a. Accordingly, other steps in Fig. 9 will be assigned with the same reference numerals as those of Fig. 7, and will not be described to avoid duplication.

Contents of processing illustrated in the flowchart of Fig. 9 are stored in the memory 70a or recording medium 71a as a program to be run by the control section 207.

The operation illustrated in the flowchart of Fig. 9 can also be performed by the image processing apparatus 270a.

The following describes the Step S2a: Based on the information representing the type of the image-capturing apparatus inputted by the operator, the device-dependent gradation characteristic compensation processing section 103a performs processing of specifying the relevant device-dependent color characteristic profile out of the device-dependent gradation/color characteristic profiles 103c (Step S2a), in parallel with the processing of specifying the relevant device-dependent gradation characteristic profile out of the device-dependent gradation characteristic profiles 103b.

The following describes the Step S4a: Based on the device-dependent color characteristic profile specified in step (Step S2a), device-dependent color characteristic compensation processing is applied to the captured image data.

The image processing apparatus 117a can carry out processing according to the flowchart of Fig. 10. In the flowchart of Fig. 10, a new step S1a of Fig. 8 is added after step S1 of Fig. 9.

Contents of processing illustrated in the flowchart of Fig. 10 are stored in the memory 70a or recording medium 7a1 as a program to be run by the control section 207.

The operation in the flowchart of Fig. 10 can also be performed by the image processing apparatus 270a.

As described above, the image processing apparatus 117 carries out gradation characteristic and color reproduction characteristic compensation for each image-capturing apparatus before creating an output-referred image data through exposure control processing/gray balance adjustment processing, γ compensation processing and nonlinear compensation processing section.

This feature endues stable output-referred image data for creating high-quality prints, independently of the type of the image-capturing apparatus, even when the image data is captured by image-capturing apparatuses designed differently in gradation characteristics and color reproduction characteristics.

The above-mentioned description of the present embodiment refers to the specific examples of an image processing method of the present invention, a recording medium for recording the program for executing the image processing method, an image processing apparatus, and image recording apparatus, without being restricted thereto. The details of the configuration and operations of the present embodiments 117 and 117a can be modified as required, without departing from the spirit of the present invention.

The present invention allows a great variety of image-capturing apparatuses to provide image processing for stable creation of image data for high quality printing.

A preferred embodiment of the present invention comprises at least three steps; a first of correcting the conversion characteristics of the image-capturing apparatus, a second step of carrying out the processing of exposure control and gray balance adjustment and a third step of carrying out the processing of gradation compensation, and improves the accuracy and efficiency by sequentially performing the processing from the first to third steps.

Disclosed embodiment can be varied by a skilled person without departing from the spirit and scope of the invention.

## Claims

1. A method for processing image data outputted from an image-capturing apparatus, said method comprising the steps of:
converting a color space, provided for said image data, to a scene-referred color space by excluding color characteristics, being inherent to said image-capturing apparatus, from said color space;
converting a gradation, provided for said image data, to a scene-referred gradation by excluding gradation characteristics, being inherent to said image-capturing apparatus, from said gradation, based on model gradation characteristic information representing said gradation characteristics inherent to said image-capturing apparatus; and
optimizing processed image data, provided with said scene-referred color space and said scene-referred gradation so as to generate output-referred image data, which are optimized for reproducing an image on a specific outputting medium.

2. The method of claim 1,
wherein said color space is converted to said scene-referred color space by excluding said color characteristics from said color space, based on model color characteristic information representing said color characteristics inherent to said image-capturing apparatus.

3. The method of claim 2,
wherein said model color characteristic information are acquired from said image data.

4. The method of claim 1,
wherein said color space is converted to said scene-referred color space by excluding chroma differences, inherently existing between various types of image-capturing apparatus.

5. The method of claim 1,
wherein said scene-referred color space is a standardized color space established in advance.

6. The method of claim 1,
wherein said model gradation characteristic information are acquired from said image data.

7. The method of claim 1, further comprising the steps of:
applying an exposure control processing and a gray-balance adjustment processing to said processed image data so as to correct a color deviation and to adjust a brightness of said image to be reproduced; and
applying a gradation correction processing to said processed image data after said step of applying said exposure control processing and said gray-balance adjustment processing, so as to adjust gradation of said image to be reproduced.

8. The method of claim 7,
wherein, in said step of applying a gradation correction processing, said gradation provided for said processed image data is nonlinearly compensated for.

9. An apparatus for processing image data outputted from an image-capturing apparatus, said apparatus comprising:
a storage to store a plurality of model gradation characteristic information sets each of which represents gradation characteristics inherent to each of a plurality of image-capturing apparatus;
a retrieving section to retrieve a model gradation characteristic information set, corresponding to an image-capturing apparatus designated by an operator, from said plurality of model gradation characteristic information sets;
a gradation converting section to convert a gradation, provided for said image data, to a scene-referred gradation by excluding gradation characteristics, being inherent to said image-capturing apparatus, from said gradation, based on said model gradation characteristic information set retrieved by said retrieving section;
a color characteristic converting section to convert a color space, provided for said image data, to a scene-referred color space by excluding color characteristics, being inherent to said image-capturing apparatus, from said color space; and
a controlling section to control a concerned section included in said apparatus so as to optimize processed image data, provided with said scene-referred gradation and said scene-referred color space, to generate outputted-referred image data, which are optimized for reproducing an image on a specific outputting medium.

10. The apparatus of claim 9,
wherein said storage also stores a plurality of model color characteristic information sets each of which represents color characteristics inherent to each of said plurality of image-capturing apparatus and said retrieving section retrieves a model color characteristic information set, corresponding to said image-capturing apparatus designated by said operator, from said plurality of model color characteristic information sets stored in said storage; and
wherein said color characteristic converting section converts said color space, provided for said image data, to said scene-referred color space by excluding said color characteristics from said color space, based on said model gradation characteristic information set retrieved by said retrieving section.

11. The apparatus of claim 10,
wherein said retrieving section acquires said model color characteristic information set from said image data.

12. The apparatus of claim 9,
wherein said color characteristic converting section converts said color space to said scene-referred color space by excluding chroma differences, inherently existing between various types of image-capturing apparatus.

13. The apparatus of claim 9,
wherein said scene-referred color space is a standardized color space established in advance.

14. The apparatus of claim 9,
wherein said retrieving section acquires said model gradation characteristic information set from said image data.

15. The apparatus of claim 9,
wherein said controlling section applies an exposure control processing and a gray-balance adjustment processing to said processed image data so as to correct a color deviation and to adjust a brightness of said image to be reproduced, and then, applies a gradation correction processing to said processed image data, so as to adjust gradation of said image to be reproduced.

16. The apparatus of claim 15,
wherein said controlling section nonlinearly compensated for said gradation provided for said processed image data when applying said gradation correction processing to said processed image data.

17. An apparatus for reproducing an image on a specific outputting medium, based on image data outputted from an image-capturing apparatus, said apparatus comprising:
a storage to store a plurality of model gradation characteristic information sets each of which represents gradation characteristics inherent to each of a plurality of image-capturing apparatus;
a retrieving section to retrieve a model gradation characteristic information set, corresponding to an image-capturing apparatus designated by an operator, from said plurality of model gradation characteristic information sets;
a gradation converting section to convert a gradation, provided for said image data, to a scene-referred gradation by excluding gradation characteristics, being inherent to said image-capturing apparatus, from said gradation, based on said model gradation characteristic information set retrieved by said retrieving section;
a color characteristic converting section to convert a color space, provided for said image data, to a scene-referred color space by excluding color characteristics, being inherent to said image-capturing apparatus, from said color space; and
a controlling section to control a concerned section included in said apparatus so as to optimize processed image data, provided with said scene-referred gradation and said scene-referred color space, to generate outputted-referred image data, which are optimized for reproducing said image on said specific outputting medium.

18. The apparatus of claim 17,
wherein said storage also stores a plurality of model color characteristic information sets each of which represents color characteristics inherent to each of said plurality of image-capturing apparatus and said retrieving section retrieves a model color characteristic information set, corresponding to said image-capturing apparatus designated by said operator, from said plurality of model color characteristic information sets stored in said storage; and
wherein said color characteristic converting section converts said color space, provided for said image data, to said scene-referred color space by excluding said color characteristics from said color space, based on said model gradation characteristic information set retrieved by said retrieving section.

19. The apparatus of claim 18,
wherein said retrieving section acquires said model color characteristic information set from said image data.

20. The apparatus of claim 17,
wherein said color characteristic converting section converts said color space to said scene-referred color space by excluding chroma differences, inherently existing between various types of image-capturing apparatus.

21. The apparatus of claim 17,
wherein said scene-referred color space is a standardized color space established in advance.

22. The apparatus of claim 17,
wherein said retrieving section acquires said model gradation characteristic information set from said image data.

23. The apparatus of claim 17,
wherein said controlling section applies an exposure control processing and a gray-balance adjustment processing to said processed image data so as to correct a color deviation and to adjust a brightness of said image to be reproduced, and then, applies a gradation correction processing to said processed image data, so as to adjust gradation of said image to be reproduced.

24. The apparatus of claim 23,
wherein said controlling section nonlinearly compensated for said gradation provided for said processed image data when applying said gradation correction processing to said processed image data.

25. A computer program for executing image-processing steps, which are applied to image data outputted from an image-capturing apparatus so as to reproduce an image on a specific outputting medium, said computer program comprising the functional steps of:
retrieving a model gradation characteristic information set, corresponding to an image-capturing apparatus designated by an operator, from a plurality of model gradation characteristic information sets stored in advance;
converting a gradation, provided for said image data, to a scene-referred gradation by excluding gradation characteristics, being inherent to said image-capturing apparatus, from said gradation, based on said model gradation characteristic information set retrieved in said retrieving step;
converting a color space, provided for said image data, to a scene-referred color space by excluding color characteristics, being inherent to said image-capturing apparatus, from said color space; and
optimizing processed image data, provided with said scene-referred gradation and said scene-referred color space, to generate outputted-referred image data, which are optimized for reproducing said image on said specific outputting medium.

26. The computer program of claim 25,
wherein, in said retrieving step, a model color characteristic information set, corresponding to said image-capturing apparatus designated by said operator, is also retrieved from a plurality of model color characteristic information sets stored in advance; and
wherein, in said second converting step, said color space, provided for said image data, is converted to said scene-referred color space by excluding said color characteristics from said color space, based on said model gradation characteristic information set retrieved in said retrieving step.

27. The computer program of claim 26,
wherein said model color characteristic information set is acquired from said image data.

28. The computer program of claim 25,
wherein, in said second converting step, said color space is converted to said scene-referred color space by excluding chroma differences, inherently existing between various types of image-capturing apparatus.

29. The computer program of claim 25,
wherein said scene-referred color space is a standardized color space established in advance.

30. The computer program of claim 25,
wherein said model gradation characteristic information set is acquired from said image data.

31. The computer program of claim 25,
wherein, in said optimizing step, an exposure control processing and a gray-balance adjustment processing are applied to said processed image data so as to correct a color deviation and to adjust a brightness of said image to be reproduced, and then, applies a gradation correction processing to said processed image data, so as to adjust gradation of said image to be reproduced.

32. The computer program of claim 31,
wherein, in said optimizing step, said gradation provided for said processed image data is nonlinearly compensated for when applying said gradation correction processing to said processed image data.

33. A storage medium that stores a computer program for executing image-processing steps, which are applied to image data outputted from an image-capturing apparatus so as to reproduce an image on a specific outputting medium,
wherein said computer program comprises the functional steps of:
retrieving a model gradation characteristic information set, corresponding to an image-capturing apparatus designated by an operator, from a plurality of model gradation characteristic information sets stored in advance;
converting a gradation, provided for said image data, to a scene-referred gradation by excluding gradation characteristics, being inherent to said image-capturing apparatus, from said gradation, based on said model gradation characteristic information set retrieved in said retrieving step;
converting a color space, provided for said image data, to a scene-referred color space by excluding color characteristics, being inherent to said image-capturing apparatus, from said color space; and
optimizing processed image data, provided with said scene-referred gradation and said scene-referred color space, to generate outputted-referred image data, which are optimized for reproducing said image on said specific outputting medium.

34. The storage medium of claim 33,
wherein, in said retrieving step, a model color characteristic information set, corresponding to said image-capturing apparatus designated by said operator, is also retrieved from a plurality of model color characteristic information sets stored in advance; and
wherein, in said second converting step, said color space, provided for said image data, is converted to said scene-referred color space by excluding said color characteristics from said color space, based on said model gradation characteristic information set retrieved in said retrieving step.

35. The storage medium of claim 34,
wherein said model color characteristic information set is acquired from said image data.

36. The storage medium of claim 33,
wherein, in said second converting step, said color space is converted to said scene-referred color space by excluding chroma differences, inherently existing between various types of image-capturing apparatus.

37. The storage medium of claim 33,
wherein said scene-referred color space is a standardized color space established in advance.

38. The storage medium of claim 33,
wherein said model gradation characteristic information set is acquired from said image data.

39. The storage medium of claim 33,
wherein, in said optimizing step, an exposure control processing and a gray-balance adjustment processing are applied to said processed image data so as to correct a color deviation and to adjust a brightness of said image to be reproduced, and then, applies a gradation correction processing to said processed image data, so as to adjust gradation of said image to be reproduced.

40. The storage medium of claim 39,
wherein, in said optimizing step, said gradation provided for said processed image data is nonlinearly compensated for when applying said gradation correction processing to said processed image data.
